(19) Europäisches Patentamt / European Patent Office / Office européen des brevets

(11) **EP 2 227 409 B1**

(12) **EUROPEAN PATENT SPECIFICATION**

(45) Date of publication and mention
of the grant of the patent:
**14.11.2012 Bulletin 2012/46**

(51) Int Cl.:
**B60W 20/00** *(2006.01)*      **B60W 30/18** *(2012.01)*
**B60W 10/08** *(2006.01)*      **B60W 10/06** *(2006.01)*
**B60K 6/445** *(2007.10)*      **B60K 6/48** *(2007.10)*

(21) Application number: **08854031.5**

(22) Date of filing: **26.11.2008**

(86) International application number:
**PCT/IB2008/003228**

(87) International publication number:
**WO 2009/068964 (04.06.2009 Gazette 2009/23)**

(54) **HYBRID VEHICLE AND CONTROL METHOD FOR HYBRID VEHICLE**

HYBRIDFAHRZEUG UND STEUERVERFAHREN FÜR EIN HYBRIDFAHRZEUG

VÉHICULE HYBRIDE ET PROCÉDÉ DE COMMANDE POUR VÉHICULE HYBRIDE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **27.11.2007 JP 2007305796**

(43) Date of publication of application:
**15.09.2010 Bulletin 2010/37**

(73) Proprietor: **Toyota Jidosha Kabushiki Kaisha
Toyota-shi, Aichi-ken 471-8571 (JP)**

(72) Inventors:
• **AOKI, Takanori**
**c/o Toyota Jidosha Kabushiki Kaisha
Toyota-shi
Aichi-ken 471-8571 (JP)**

• **KAMIYA, Kazuyoshi**
**c/o Toyota Jidosha Kabushiki Kaisha
Toyota-shi
Aichi-ken 471-8571 (JP)**

(74) Representative: **TBK
Bavariaring 4-6
80336 München (DE)**

(56) References cited:
**EP-A- 1 632 378      JP-A- 2007 131 103
US-A- 6 116 363**

**Description**

BACKGROUND OF THE INVENTION

1. Field of the Invention

The invention relates to a hybrid vehicle and a control method for a hybrid vehicle.

2. Description of the Related Art

There is proposed a vehicle having a plurality of modes in which different driving force characteristics are determined for the operation of an accelerator (e.g., see JP-A-2007-91073). In this vehicle, a characteristic with larger driving force is adopted when a power mode is set than when a normal mode is set. As a result, high responsiveness can be obtained at the time of the power mode.

Document US 6,116,363 discloses a charge depletion method and apparatus for operating the electric motor and auxiliary power unit, such as an internal combustion engine, in a hybrid electric vehicle separately or together depending upon the driving conditions. Operations of the electric motor and auxiliary power unit are coordinated as a function of a control policy for the auxiliary power unit based on desired least fuel consumption and/or vehicle emissions characteristics. In particular, different look-up tables for the engine start and vehicle thresholds are stored.

Document JP-A-2007-131103 discloses a hybrid vehicle as defined in the preamble of claim 1 and a control method for a hybrid vehicle as defined in the preamble of claim 8.

In particular, there is proposed a hybrid vehicle having an internal combustion engine, electric power/motive power input/output means, and an electric motor that are controlled such that a driving force based on a required driving force is obtained with the internal combustion engine operated intermittently when the speed of the vehicle is lower than an intermittent operation prohibition vehicle speed, and are controlled such that a driving force based on a required driving force is obtained with the internal combustion engine operated when the speed of the vehicle is equal to or higher than the intermittent operation prohibition vehicle speed (e.g., JP-A-2007-131103)). In this vehicle, the internal combustion engine can be stopped when the speed of the vehicle is lower than the intermittent operation prohibition vehicle speed and the internal combustion engine does not need to be operated. Therefore, fuel economy can be improved.

In the vehicle disclosed in JP-A-2007-131103, the internal combustion engine needs to be started when the vehicle is accelerated with the internal combustion engine stopped and the speed of the vehicle becomes equal to or higher than the intermittent operation prohibition vehicle speed. Therefore, there is a problem in that "a feeling of limping along" is caused by a delay in the rising of a driving force during the start of the internal combustion engine. This problem is especially serious when greater importance is given to the responsiveness of the driving force of the vehicle as in the case of the power mode described in JP-A-2007-91073. On the other hand, good responsiveness of the driving force is obtained in the power mode if the internal combustion engine is not stopped. However, the internal combustion engine is driven in an idling state even when the operation thereof is unnecessary. Therefore, there is a problem in that fuel economy deteriorates in the normal mode.

SUMMARY OF THE INVENTION

In view of the foregoing, it is an object of the invention to provide a hybrid vehicle and a control method for a hybrid vehicle that can eliminate "a feeling of limping along" during acceleration in a power mode and improve the responsiveness of a driving force without deteriorating fuel economy in a normal mode. This object is solved by a hybrid vehicle as set out in claim 1, and alternatively by a control method for a hybrid vehicle as set out in claim 8.

A hybrid vehicle according to a first aspect of the invention is equipped with an internal combustion engine, electric power/motive power

input/output means, an electric motor, storage means, vehicle speed detection means, required driving force setting means, running mode setting means, vehicle speed threshold setting means, and control means. The electric power/ motive power input/output means is connected to a drive shaft connected to wheels, and connected to an output shaft of the internal combustion engine rotatably independently of the drive shaft to input motive powers from the drive shaft and the output shaft and output motive powers to the drive shaft and the output shaft with an electric power and a motive power input/output. The electric motor inputs/outputs a motive power for.running. The stowage means exchanges electric powers with the electric power/motive power input/output means and the electric motor. The vehicle speed detection means detects a vehicle speed. The required driving force setting means sets a required driving force required for running. The running mode setting means sets a running mode from among a plurality of running modes including a normal mode and a power mode in which higher priority is given to responsiveness of a driving force than in the normal mode. In setting, on the basis of the running modes, a vehicle speed threshold as a boundary value between a stop permission vehicle speed range for permitting the internal combustion engine to be stopped and a stop prohibition vehicle speed range for prohibiting the internal combustion engine from being stopped, the vehicle speed threshold setting means sets the vehicle speed threshold smaller when the power mode is set than when the normal mode is set. The control means permits the internal combustion engine to be stopped and controls the internal combustion engine, the electric power/motive power input/output means, and the electric motor such that the vehicle runs by a driving force based on the set required driving force when the detected vehicle speed is included in the set stop permission vehicle speed range, and prohibits the internal combustion engine from being stopped and controls the internal combustion engine, the electric power/motive power input/output means, and the electric motor such that the vehicle runs by a driving force based on the set required driving force when the detected vehicle speed is included in the set stop prohibition vehicle speed range.

In this hybrid vehicle according to the first aspect of the invention, the vehicle speed threshold is set smaller when the power mode is set than when the normal mode is set in setting, on the basis of the running modes, the vehicle speed threshold as the boundary value between the stop permission vehicle speed range for permitting the internal combustion engine to be stopped and the stop prohibition vehicle speed range for prohibiting the internal combustion engine from being stopped. When the vehicle speed of the vehicle is included in the stop permission vehicle speed range, the internal combustion engine is permitted to be stopped. When the vehicle speed of the vehicle is included in the stop prohibition vehicle speed range, the internal combustion engine is prohibited from being stopped. Also, the internal combustion engine, the electric power/motive power input/output means, and the electric motor are controlled such that the vehicle runs by the set required driving force. In this manner, the vehicle speed is more often included in the stop prohibition vehicle speed range and the internal combustion engine is more often prohibited from being stopped in the power mode than in the normal mode. Accordingly, the internal combustion engine is often in operation curing acceleration in the power mode. Therefore, "a feeling of limping along" is less often caused during acceleration, and the responsiveness of the driving force is enhanced. Further, the vehicle speed is more often included in the stop permission vehicle speed range and the internal combustion engine is more often permitted to be stopped in the normal mode than in the power mode. Accordingly, the internal combustion engine can be appropriately stopped in the normal mode when the operation of the internal combustion engine is unnecessary. As a result, no deterioration in fuel economy is caused.

The vehicle speed threshold setting means may set the vehicle speed threshold smaller when the internal combustion engine is in operation than when the internal combustion engine is stopped. In this manner, the internal combustion engine can be prevented from being operated and stopped frequently when the vehicle is running at a vehicle speed close to the vehicle speed threshold.

Further, the electric power/motive power input/output means may be equipped with an electric power generator capable of inputting/outputting a motive power, and three shaft-type motive power input/output means connected to the output shaft of the internal combustion engine, the drive shaft, and a rotary shaft of the electric power generator to input a motive power from one shaft or output a motive power to the one shaft, on the basis of motive powers input from or output to other two shafts among the three shafts.

Further, the hybrid vehicle may be equipped with a running mode setting switch, and the running mode setting means may set a running mode in accordance with an operation of the running mode setting switch.

Further, the running mode setting means may make a changeover in the running mode depending on whether or not at least one of a value of an accelerator operation amount, an amount of change in the accelerator operation amount, an average of a vehicle speed V, and an amount of change in the average of the vehicle speed V has exceeded a certain value.

Further, the vehicle speed threshold setting means may set a predetermined vehicle speed threshold for each of the running modes.

Further, the vehicle speed threshold setting means may set.the vehicle speed threshold on the basis of input/ output limits of a battery.

A second aspect of the invention relates to a control method for a hybrid vehicle equipped with an internal combustion engine, electric power/motive power input/output means, an electric motor, storage means, vehicle speed detection means, and running mode setting means. The electric power/motive power input/output means is connected to a drive shaft connected to wheels, and connected to an output shaft of the internal combustion engine rotatably independently of the drive shaft to input motive powers from the drive shaft and the output shaft and output motive powers to the drive shaft and the output shaft with an electric power and a motive power input/output. The electric motor inputs/outputs a motive power for running. The storage means exchanges electric powers with the electric power/motive power input/output means and the electric motor. The vehicle speed detection means detects a vehicle speed. The running mode setting means sets a running mode from among a plurality of running modes including a normal mode and a power mode in which higher priority is given to responsiveness of a driving force than in the normal mode. The control method includes setting a vehicle speed threshold, which is a boundary value between a stop permission vehicle speed range for permitting the internal combustion engine to be stopped and a stop prohibition vehicle speed range for prohibiting the internal combustion engine from being stopped, smaller when the power mode is set than when the normal mode is set in setting the vehicle speed threshold on the basis of the running modes, permitting the internal combustion engine to be stopped and controlling the internal combustion engine, the electric power/motive power input/output means, and the electric motor such that the vehicle runs by a driving force based on a required driving force required for running when the detected vehicle speed is included in the set stop permission vehicle speed range, and prohibiting the internal combustion engine from being stopped and controlling the internal combustion engine, the electric power/motive power input/output means, and the electric motor such that the vehicle runs by a driving force based on the required driving force when the detected vehicle speed is included in the set stop prohibition vehicle speed range.

In this control method for the hybrid vehicle according to the second aspect of the invention, the vehicle speed threshold is set smaller when the power mode is set than when the normal mode is set in setting, on the basis of the running modes, the vehicle speed threshold as the boundary value between the stop permission vehicle speed range for permitting the internal combustion engine to be stopped and the stop prohibition vehicle speed range for prohibiting the internal combustion engine from being stopped. When the vehicle speed of the vehicle is included in the stop permission vehicle speed range, the internal combustion engine is permitted to be stopped. When the vehicle speed of the vehicle is included in the stop prohibition vehicle speed range, the internal combustion engine is prohibited from being stopped. Also, the interval combustion engine, the electric power/motive power input/output means, and the electric motor are controlled such that the vehicle runs by the sent required driving force. In this manner, the vehicle speed is more often included in the stop prohibition vehicle speed range and the internal combustion engine is more often prohibited from being stopped in the power mode than in the normal mode. Accordingly, the internal combustion engine is more often in operation during acceleration in the power mode. Therefore, "a feeling of limping along" is less often caused during acceleration, and the responsiveness of the driving force is enhanced. Further, the vehicle speed is more often included in the stop permission vehicle speed range and the internal combustion engine is more often permitted to be stopped in the normal mode than in the power mode. Accordingly, the internal combustion engine can be appropriately stopped in the normal mode when the operation of the internal combustion engine is unnecessary. As a result, no deterioration in fuel economy is caused.

BRIEF DESCRIPTION OF THE DRAWINGS

The foregoing and further features and advantages of the invention will become apparent from the following description of an example embodiment with reference to the accompanying drawings, wherein like numerals are used to represent like elements, and wherein:

FIG. 1 is a schematic diagram showing the outline of the configuration of a hybrid automobile 20;
FIGs. 2A-2B are flowcharts showing an example of a driving control routine executed by a hybrid electronic control unit 70 according to the embodiment of the invention;
FIG. 3 is a flowchart showing an example of an intermittence prohibition vehicle speed setting routine executed by the hybrid electronic control unit 70 according to the embodiment of the invention;
FIGs. 4A-4B are illustrative views showing relationships among intermittence prohibition vehicle speeds Vstop and Vstart and V1 to V4;
FIG 5 is an illustrative view showing an example of a required torque setting map;
FIG. 6 is an illustrative view showing an example of an operation line of an engine 22 and how a target rotational speed Ne* and a target torque Te* are set;
FIG 7 is an illustrative view showing an example of an alignment chart showing a mechanical relationship between rotational speed and torque in rotational elements of a motive power distribution/synthesis mechanism 30 when the hybrid automobile 20 is running with a power output from the engine 22;
FIG. 8 is an illustrative view showing how torque limits Tm1min and Tm1max are set;
FIG. 9 is an illustrative view showing an example of an alignment chart showing a mechanical relationship between rotational speed and torque in the rotational elements of the motive power distribution/synthesis mechanism 30 when the hybrid automobile 20 is running with the engine 22 stopped from being operated;
FIG. 10 is an illustrative view showing an example of an alignment chart showing a mechanical relationship between rotational speed and torque in the rotational elements of the motive power distribution/synthesis mechanism 30 when the hybrid automobile 20 is running with the engine 22 in a motoring state;
FIG. 11 is a schematic diagram showing the outline of the configuration of a hybrid automobile 120 according to a modification example of the embodiment of the invention; and
FIG. 12 is a schematic diagram showing the outline of the configuration of a hybrid automobile 220 according to another modification example of the embodiment of the invention.

**EP 2 227 409 B1**

DETAILED DESCRIPTION OF EMBODIMENT

Next, the best mode for implementing the invention will be described using the embodiment thereof.

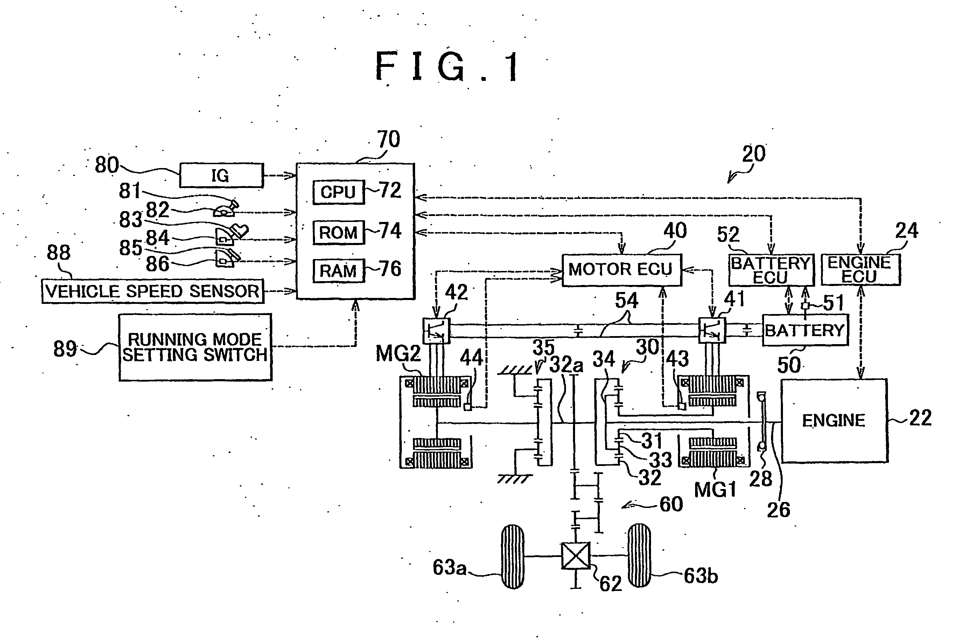

FIG. 1 is a schematic diagram showing the outline of the configuration of a hybrid automobile 20 according to one embodiment of the invention. As shown in FIG. 1, the hybrid automobile 20 according to the embodiment of the invention is equipped with an engine 22, a three shaft-type motive power distribution/synthesis mechanism 30 connected to a crankshaft 26 as an output shaft of the engine 22 via a damper 28, a motor MG1 connected to the motive power distribution/synthesis mechanism 30 and capable of generating electric power, a reduction gear 35 mounted on a ring gear shaft 32a as a drive shaft connected to the motive power distribution/systhesis mechanism 30, a motor MG2 connected to this reduction gear 35, and a hybrid electronic control unit 70 for controlling an entire motive power output device.

The engine 22 is an internal combustion engine that outputs a motive power using a hydrocarbon-type fuel, for example, gasoline, diesel oil, or the like. The engine 22 is subjected to various types of operation control such as fuel injection control, ignition control, intake air amount adjustment control, and the like by an engine electronic control unit (hereinafter referred to as the engine ECU) 24, Signals from various sensors for detecting an operation state of the engine 22, for example, a crank position from a crank position sensor (not shown) for detecting a crank angle of a crankshaft 26 of the engine 22 and the like are input to the engine ECU 24. Further, the engine ECU 24 is in communication with a hybrid electronic control unit 70, and controls the operation of the engine 22 in accordance with a control signal from the hybrid electronic control unit 70. When necessary, the engine ECU 24 outputs data on the operation state of the engine 22 to the hybrid electronic control unit 70. The engine ECU 24 also calculates a rotational speed of the crankshaft 26, namely, a rotational speed Ne of the engine 22 on the basis of a crank position from the crank, position sensor (not shown).

The motive power distribution/synthesis mechanism 30 is equipped with a sun gear 31 as an external gear, a ring gear 32 as an internal gear disposed concentrically with this sun gear 31, a plurality of pinion gears 33 meshing with the sun gear 31 and the ring gear 32, and a carrier 34 for holding the plurality of the pinion gears 33 such that these pinion gears 33 can rotate on their own axes respectively and around the carrier 34. The motive power distribution/synthesis mechanism 30 is constituted as a planetary gear mechanism for performing a differential operation with the sun gear 31, the ring gear 32, and the carrier 34 serving as rotational elements. In the motive power distribution/synthesis mechanism 30, the crankshaft 26 of the engine 22 is coupled to the carrier 34, the motor MG1 is coupled to the sun gear 31, and the reduction gear 35 is coupled to the ring gear 32 via the ring gear shaft 32a. When the motor MG1 functions as an electric power generator, a motive power from the engine 22, which is input from the carrier 34, is distributed to the sun gear 31 side and the ring gear 32 side according to a gear ratio therebetween. When the motor MG1 functions as an electric motor, a motive power from the engine 22, which is input from the carrier 34, and a motive power from the motor MG1, which is input from the sun gear 31, are synthesized with each other to be output to the ring gear 32 side. The motive power output to the ring gear 32 is eventually output from the ring gear shaft 32a to deriving wheels 63a and 63b of a vehicle via a gear mechanism 60 and a differential gear 62.

Each of both the motors MG1 and MG2 is constructed as a known synchronous electric power generation motor that can be driven as an electric power generator and an electric motor. The motors MG1 and MG2 exchange an electric power with a battery 50 via inverters 41 and 42 respectively. Electric power lines 54 for connecting the inverters 41 and 42 to the battery 50 are constructed as a positive bus and a negative bus, which are commonly used by the respective inverters 41 and 42, such that an electric power generated by one of the motors MG1 and MG2 can be consumed by the other motor. Accordingly, the battery 50 is charged/discharged through an electric power generated by one of the motors MG1 and MG2 or due to a deficiency in electric power. If the input of electric power and the output of electric power are balanced with each other by the motors MG1 and MG2, the battery 50 is not charged/discharged. The; motors MG1 and MG2 are both drivingly controlled by a motor electronic control unit (hereinafter referred to as the motor ECU) 40. Signals necessary for the driving control of the motors MG1 and MG2, for example, signals from rotational position detection sensors 43 and 44 for detecting rotational positions of rotors of the motors MG1 and MG2, signals from current sensors (not shown) for detecting phase currents applied to the motors MG1 and MG2, and the like are input to the motor ECU 40. Switching control signals for the inverters 41 and 42 are output from the motor ECU 40. The motor ECU 40 is in communication with the hybrid electronic control unit 70, and drivingly controls the motors MG1 and MG2 in accordance with a control signal from the hybrid electronic control unit 70. When necessary, the motor ECU 40 outputs data on the operation states of the motors MG1 and MG2 to the hybrid electronic control unit 70. The motor ECU 40 also calculates rotational speeds Nm1 and Nm2 of the motors MG1 and MG2 on the basis of signals from the rotational position detection sensors 43 and 44 respectively.

The battery 50 is supervised by a battery electronic control unit (hereinafter referred to as the battery ECU) 52. Signals necessary for the supervision of the battery 50, for example, an inter-terminal voltage from a voltage sensor (not shown) installed between terminals of the battery 50, a charge/discharge current from a current sensor (not shown) fitted to the electric power lines 54 connected to the output terminal of the battery 50, a battery temperature Tb from a temperature sensor 51 fitted to the battery 50, and the like are input to the battery ECU 52. When necessary, the battery ECU 52 outputs data on the state of the battery 50 to the hybrid electronic control unit 70 through communication. Further, the battery ECU 52 calculates a remaining capacity (SOC) on the basis of an integrated value of a charge/discharge current detected by the current sensor to supervise the battery 50, and calculates an input limit Win and an output limit Wout as maximum permissible electric powers with/of which the battery 50 may be charged/discharged, on the basis of the calculated remaining capacity (SOC) and the battery temperature Tb.

The hybrid electronic control unit 70 is constructed as a micro processor mainly composed of a CPU 72, and is equipped with a ROM 74 for storing processing programs, a RAM 76 for temporarily storing data, input/output ports (not shown), and communication ports (not shown) in addition to the CPU 72. An ignition signal from an ignition switch 80, a shift position SP from a shift position sensor 82 for detecting an operation position of a shift lever 81, an accelerator operation amount Acc from an accelerator pedal position sensor 84 for detecting a depression amount of an accelerator pedal 83, a brake pedal position BP from a brake pedal position sensor 86 for detecting a depression amount of a brake pedal 85, a vehicle speed V from a vehicle speed sensor 88, a mode setting signal MSW from a running mode setting switch 89 for setting a running mode to a normal mode or a power mode, in which priority is given to the responsiveness of a driving force, through the operation by a driver, and the like are input to the hybrid electronic control unit 70 via the input ports. As described above, the hybrid electronic control unit 70 is connected to the engine ECU 24, the motor ECU 40, and the battery ECU 52 via the communication ports, and exchanges various control signals and various data with the engine ECU 24, the motor ECU 40, and the battery ECU 52.

In the hybrid automobile 20 according to the embodiment of the invention, a required torque Tr* to be output to the ring gear shaft 32a as the drive shaft is calculated on the basis of the accelerator operation amount Acc, which corresponds to the amount of depression of the accelerator pedal 83 by the driver, and the vehicle speed V, and the engine 22 and the motors MG1 and MG2 are operationally controlled such that a required motive power corresponding to this required torque Tr* is output to the ring gear shaft 32a. In operationally controlling the engine 22 and the motors MG1 and MG2, there are a torque conversion operation mode, a charge/discharge operation mode, a motor operation mode, and the like. In the torque conversion operation mode, the engine 22 is operationally controlled such that a motive power corresponding to the required motive power is output from the engine 22, and the motors MG1 and MG2 are drivingly controlled such that the motive power output from the engine 22 is entirely subjected to torque conversion by the motive power distribution/synthesis mechanism 30 and the motors MG1 and MG2 and output to the ring gear shaft 32a. In the charge/discharge operation mode, the engine 22 is operationally controlled such that a motive power corresponding to the sum of the required motive power and an electric power necessary for the charge/discharge of the battery 50 is output from the engine 22, and the motors MG1 and MG2 are drivingly controlled such that the motive power output from the engine 22 with the charging/discharging of the battery 50 is entirely or partially subjected to torque conversion by the motive power distribution/synthesis mechanism 30 and the motors MG1 and MG2 and the required motive power is output to the ring gear shaft 32a. In the motor operation mode, the operation of the engine 22 is stopped, and the engine 22 and the motors MG1 and MG2 are operationally controlled such that the motive power corresponding to the required motive power, which is obtained from the motor MG2, is output to the ring gear shaft 32a.

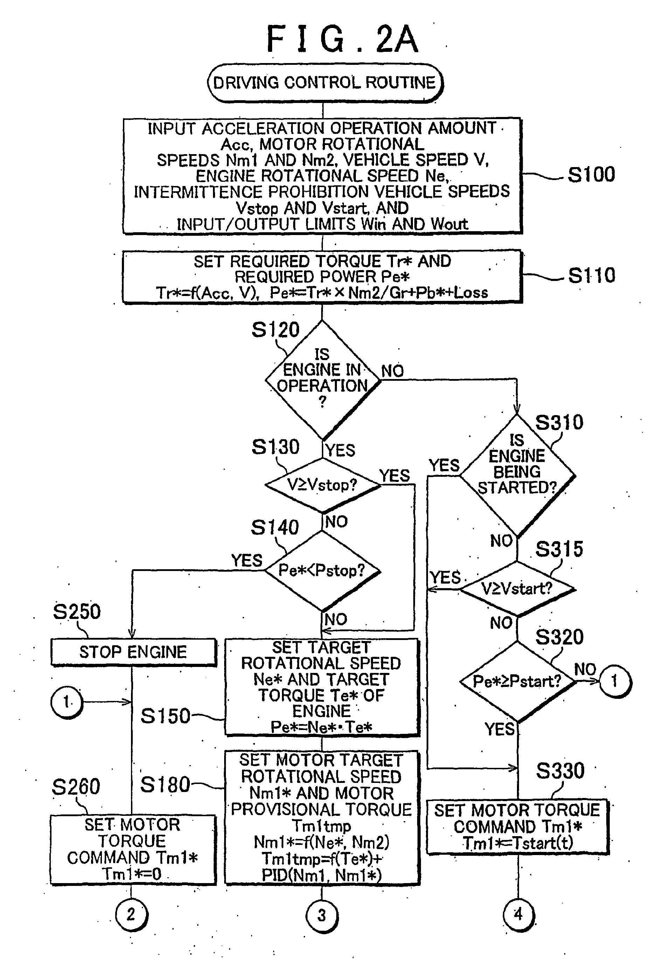

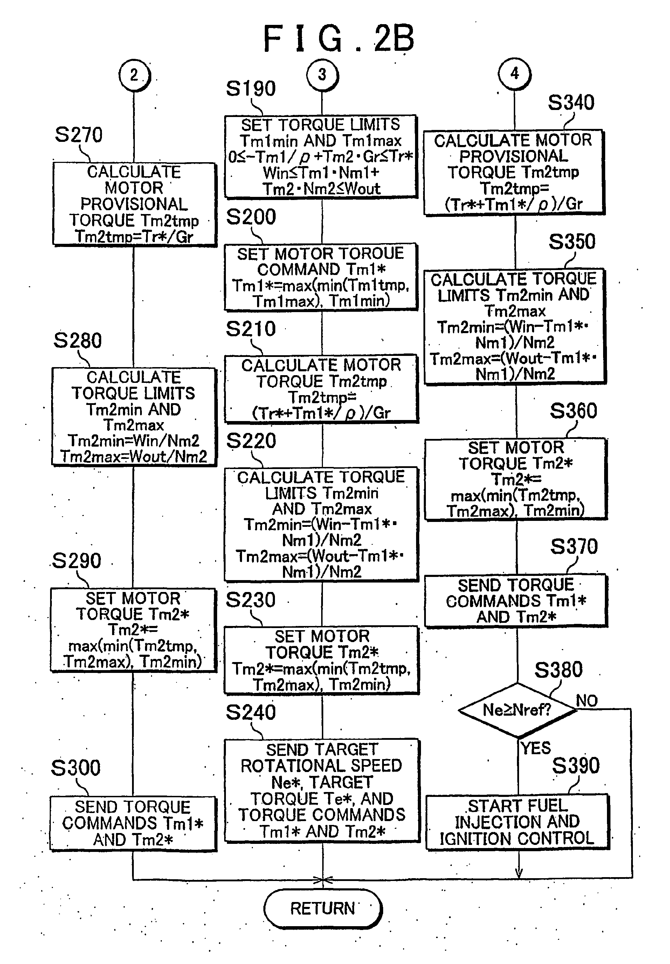

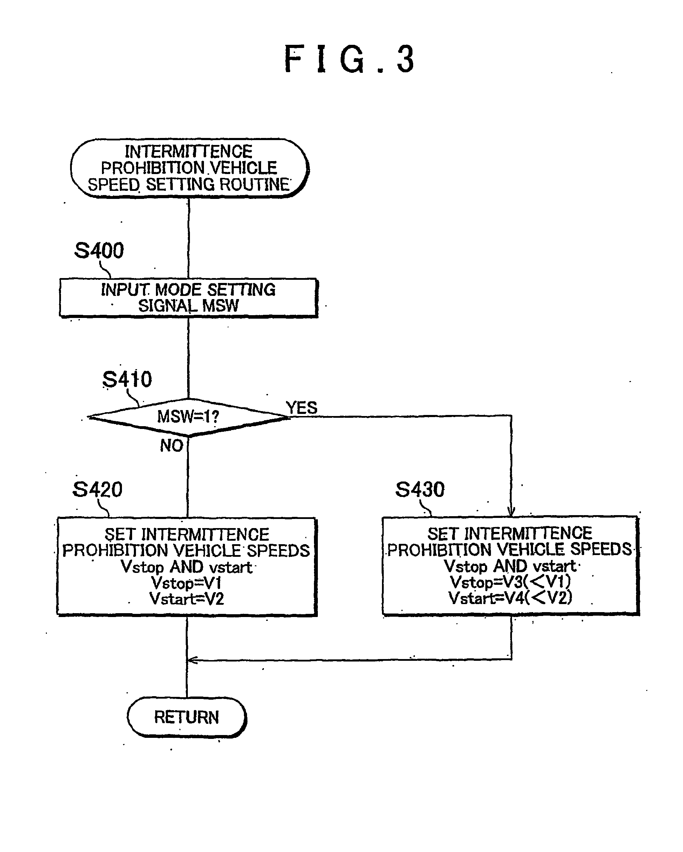

Next, the operation of the hybrid automobile 20 thus configured according.to this embodiment of the invention will be described. FIGs. 2A-2B are flowcharts showing an example of a driving control routine executed by the hybrid electronic control unit 70. FIG. 3 is a flowchart showing an example of an intermittence prohibition vehicle speed setting routine for setting intermittence prohibition vehicle speeds Vstop and Vstart that are used in the driving control routine. The intermittence prohibition vehicle speed Vstop is a boundary value between an intermittence permission vehicle speed range in which the engine is permitted to be operated intermittently during the operation thereof and an intermittence prohibition vehicle speed range in which the engine 22 is prohibited from being operated intermittently during the operation thereof. The intermittence prohibition vehicle speed Vstart is a boundary value between an intermittence permission vehicle speed range in which the engine 22 is permitted to be operated intermittently during the stoppage thereof and an intermittence prohibition vehicle speed range in which the engine 22 is prohibited from being operated intermittently during the stoppage thereof. Each of the driving control routine and the intermittence prohibition vehicle speed setting routine is repeatedly executed at intervals of,a predetermined time (e.g. at intervals of several milliseconds). For convenience of explanation, a processing of setting the intermittence prohibition vehicle speeds Vstart and Vstop will be described first using the intermittence prohibition vehicle speed setting routine of FIG. 3, and after that, driving control will be described using the driving control routine of FIGs. 2A-2B.

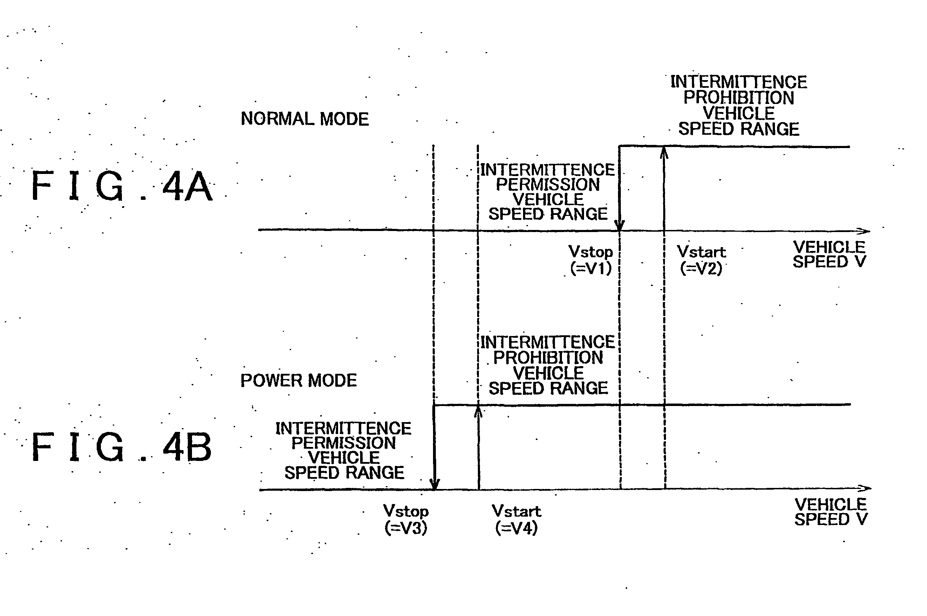

When the intermittence prohibition vehicle speed setting routine of FIG. 3 is executed, the CPU 72 of the hybrid electronic control unit 70 first performs a processing of inputting the mode setting signal MSW from the running mode setting switch 89 (step S400). The CPU 72 then checks the value of the mode setting signal MSW (step S410). The value of the mode setting signal MSW is set to 0 when the normal mode is set by the running mode setting switch 89, and is set to 1 when the power mode is set by the running mode setting switch 89. When the value of MSW is 0 in step S410, namely, when the running mode is the normal mode, the CPU 72 sets the values of the intermittence prohibition vehicle speeds Vstop and Vstart to V1 and V2 respectively (step S420), thereby terminating the present routine. On the other hand, when the value of MSW is 1 in step S410, namely, when the running mode is the power mode, the CPU 72 sets the values of the intermittence prohibition vehicle speeds Vstop and Vstart to V3 and V4 respectively (step S430), thereby terminating the present routine. FIGs. 4A-4B are illustrative views showing relationships among the intermittence prohibition vehicle speeds Vstop and Vstart set in the present routine and the values V1 to V4. It should be noted that the values V1 and V2 are experimentally determined such that fuel economy and the responsiveness of a driving force are maintained in a well balanced manner when the values V1 and V2 are set as the intermittence prohibition vehicle speeds, Vstop and Vstart respectively and the later-described driving control routine is executed. The values V3 and V4 are set smaller than the values V1 and V2 respectively such that high responsiveness of a driving force as required in the power mode is obtained when the values V3 and V4 are set as the intermittence prohibition vehicle speeds Vstop and Vstart respectively and the later-described driving control routine is executed. Further, in order to prevent the engine 22 from being operated and stopped frequently when the later-described driving control routine is executed, values larger than the values V1 and V3 may be used as the values V2 and V4 respectively.

Next, the driving control performed using the intermittence prohibition vehicle speeds Vstop and Vstart thus set will be described. When the driving control routine of FIGs. 2A-2B is executed, the CPU 72 of the hybrid electronic control unit 70 first performs a processing of inputting data required for the control, such as the accelerator operation amount Acc from the accelerator pedal position sensor 84, the vehicle speed V from the vehicle speed sensor 88, the rotational speed Ne of the engine 22, the rotational speeds Nm1 and Nm2 of the motors MG1 and MG2, the intermittence prohibition vehicle speeds Vstop and Vstart, the input/output limits Win and Wout of the battery 50, and the like (step S100). It should be noted herein that the rotational speed Ne of the engine 22 is calculated on the basis of a signal from the crank position sensor (not shown) and then input through communication from the engine ECU 24. Further, the rotational speeds Nm1 and Nm2 of the motors MG1 and MG2 are calculated on the basis of rotational positions of the rotors of the motors MG1 and MG2 detected by the rotational position detection sensors 43 and 44 and then input through communication from the motor ECU 40. Furthermore, the input/output limits Win and Wout of the battery 50 are set on the basis of the battery temperature Tb of the battery 50 and the remaining capacity (SOC) of the battery 50 and then input through communication from the battery ECU 52. The intermittence prohibition vehicle speeds Vstop and Vstart are set by the aforementioned intermittence prohibition vehicle speed setting routine exemplified in FIG. 3 and then input.

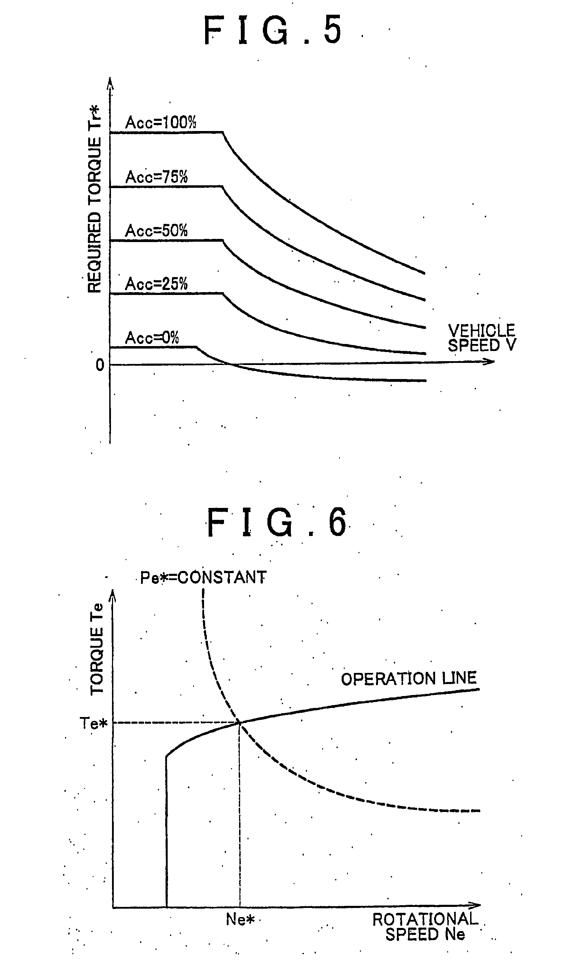

When the data are thus input, the CPU 72 sets, as torques required for the vehicle, the required torque Tr* to be output to the ring gear shaft 32a as the drive shaft coupled to the driving wheels 63a and 63b and a required power Pe* required for the engine 22, on the basis of the input accelerator operation amount Acc and the input vehicle speed V (step S110). In the embodiment of the invention, the required torque Tr* is set by determining in advance a relationship among the accelerator operation amount Acc, the vehicle speed V, and the required torque Tr*, storing this relationship into the ROM 74 as a required torque setting map, and deriving a corresponding value of the required torque Tr* from the stored map when the accelerator operation amount Acc and the vehicle speed V are given. FIG. 5 shows an example of the required torque setting map. The required power Pe* can be calculated as the sum of a value obtained by multiplying a set required torque Tr* by a rotational speed Nr of the ring gear shaft 32a, a charge/discharge required power Pb* required by the battery 50, and a loss Loss. The rotational speed Nr of the ring gear shaft 32a can be calculated by multiplying the vehicle speed V by a conversion coefficient k (Nr = k·V) or dividing the rotational speed Nm2 of the motor MG2 by a gear ratio Gr of the reduction gear 35 (Nr = Nm2/Gr).

The CPU 72 then determines whether or not the engine 22 is in operation (step S120). When the engine 22 is in operation, the CPU 72 determines whether or not the vehicle speed V is equal to or higher than the intermittence prohibition vehicle speed Vstop (step S130) in order to determine whether to permit the engine 22 to be operated intermittently or not. When the vehicle speed V is equal to or higher than the intermittence prohibition vehicle speed Vstop, namely, when the vehicle speed V is included in the intermittence prohibition vehicle speed range as a range of high vehicle speed with the intermittence prohibition vehicle speed Vstop shown in FIGs. 4A and 4B serving as a boundary value, the CPU 72 prohibits the engine 22 from being operated intermittently and determines that the engine 22 should be operated continuously without being stopped. On the other hand, when the vehicle speed V is not equal to or higher than the intermittence permission vehicle speed Vstop, namely, when the vehicle speed V is included in the intermittence prohibition vehicle speed range as a range of low vehicle speed with the intermittence prohibition vehicle speed Vstop shown in FIGs. 4A and 4B serving as a boundary value, the CPU 72 permits the engine 22 to be operated intermittently and determines that the engine 22 can be stopped. It should be noted herein that the aforementioned intermittence prohibition vehicle speed setting routine sets the intermittence prohibition vehicle speed Vstop to the value V1 when the running mode is the normal mode, and to the value V3 when the running mode is the power mode. As shown in FIGs. 4A and 4B, the value V3 is smaller than the value V1. Therefore, the intermittence prohibition vehicle speed range is wider when the running mode is the power mode than when the running mode is the normal mode. Accordingly, the vehicle speed V is often equal to or higher than the intermittence prohibition vehicle speed Vstop even when it is low, and the CPU 72 often determines that the engine 22 should be operated continuously.

When the vehicle speed V is equal to or higher than the intermittence prohibition vehicle speed Vstop in step S130, the CPU 72 sets a target rotational speed Ne* and a target torque Te* as operation points where the engine 22 should be operated, on the basis of the required power Pe* set in step S110 (step S150). This setting is carried out on the basis of an operation line for efficiently operating the engine 22 and the required power Pe*. FIG. 6 shows an example of the operation line of the engine 22 and how the target rotational speed Ne* and the target torque Te* are set. As shown in FIG. 6, each of the target rotational speed Ne* and the target torque Te* are calculated as an intersecting point between a curve where the required power Pe* (= Ne*xTe*) is constant and the operation line.

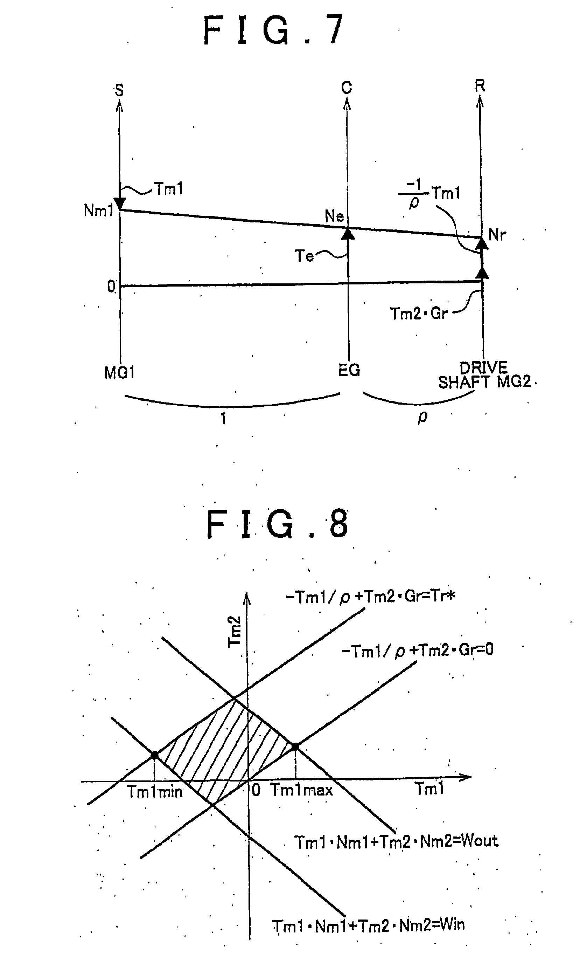

The CPU 72 then calculates the target rotational speed Nm1* of the motor MG1. according to an expression (1) shown below using the target rotational speed Ne* of the engine 22, the rotational speed Nm2 of the motor MG2, a gear ratio p of the motive power distribution/synthesis mechanism 30, and a gear ratio Gr of the reduction gear 35, and calculates a provisional torque Tm1tmp as a provisional value of a torque to be output from the motor MG1 according to an expression (2) shown below on the basis of the calculated target rotational speed Nm1* and the input rotational speed Nm1 of the motor MG1 (step S180). It should be noted herein that the expression (1) is a mechanical relational expression for the rotational elements of the motive power distribution/synthesis mechanism 30. FIG. 7 is an alignment chart showing a mechanical relationship between rotational speed and torque in the rotational elements of the motive power distribution/synthesis mechanism 30 when the hybrid automobile is running with a power output from the engine 22. In FIG. 7, an S axis on the left represents the rotational speed of the sun gear 31 as the rotational speed Nm1 of the motor MG1, a C. axis at the center represents the rotational speed of the carrier 34 as the rotational speed Ne of the engine 22, and an R axis on the right represents the rotational speed Nr of the ring gear 32, which is obtained by dividing the rotational speed Nm2 of the motor MG2 by the gear ratio Gr of the reduction gear 35. 'The expression (1) can be derived easily if this alignment chart is used. Two thick arrows on the R axis indicate a torque acting on the ring gear shaft 32a as the torque Tm1 output from the motor MG1 and a torque acting on the ring gear shaft 32a via the reduction gear 35 as the torque Tm2 output from the motor MG2. Further, the expression (2) is a relational expression in feedback control for rotating the motor MG1 at the target rotational speed Nm1*. In the expression (2), "k1" in the second term of the right side denotes a gain of a proportional term, and "k2" in the third term of the right side denotes a gain of an integral term.

$$Nm1* = Ne*\cdot(1+\rho)/\rho-Nm2/(Gr\cdot\rho) \ (1)$$

Nm1* = Ne*·(1+p)/p-Nm2/(Gr·p) (1)

$$Tm1tmp = \rho\cdot Te*/(1+\rho)+k1(Nm1*-Nm1)+k2\int(Nm1*-Nm1)dt \ (2)$$

The CPU 72 then sets torque limits Tm1min as a lower limit of the provisional torque Tm1tmp and Tm1max as an upper limit of the provisional torque Tm1tmp, which satisfy both the expressions (3) and (4) (step S190), and sets the torque command Tm1* of the motor MG1 by limiting the set provisional torque Tm1tmp by the torque limits Tm1min and Tm1max according to an expression (5) (step S200). It should be noted herein that the expression (3) represents a relationship where the sum of torques output to the ring gear shaft 32a by the motors MG1 and MG2 is within a range from the value of 0 to the required torque Tr*, and that the expression (4) represents a relationship where the sum of the electric powers input/output by the motors MG1 and MG2 is within a range between the input/output limits Win and Wout. FIG. 8 shows an example of the torque limits Tm1min and Tm1max. The torque limits Tm1min and Tm1max can be calculated respectively as a maximum of the torque command Tm1* and a minimum of the torque command Tm1* within a hatched region in FIG 8.

$$0 \le -Tm1/\rho+Tm2\cdot Gr \le Tr* \ (3)$$

0 ≤ -Tm1/p+Tm2·Gr ≤ Tr* (3)

$$Win \le Tm1\cdot Nm1+Tm2\cdot Nm2 \le Wout \ (4)$$

$$Tm1* = max(min(Tm1tmp, Tm1max), Tm1min) \ (5)$$

The CPU 72 then calculates a provisional torque Tm2tmp as a provisional value of the torque to be output from the motor MG2 according to an expression (6) shown below (step S210) by adding to the required torque Tr* a value obtained by dividing the torque Tm1* by the gear ratio p of the motive power distribution/synthesis mechanism 30, calculates torque limits Tm2min and Tm2max as a lower limit of torque and an upper limit of torque which may be output from the motor MG2 according to expressions (7) and (8) shown below (step S220) by dividing differences between the input/output limits Win and Wout of the battery 50 and an electric power consumption (generated electric power) of the motor MG1, which is obtained by multiplying the set torque command Tm1* by the current rotational speed Nm1 of the motor MG1, by the rotational speed Nm2 of the motor MG2, and sets the torque command Tm2* of the motor MG2 (step S230) by limiting the set provisional torque Tm2tmp by the torque limits Tm2min and Tm2max according to an expression (9). It should be noted herein that the expression (6) can be easily derived from the alignment chart of FIG. 7.

$$Tm2tmp = (Tr* + Tm1tmp/\rho)/Gr \quad (6)$$

$Tm2tmp = (Tr* + Tm1tmp/p)/Gr \quad (6)$

$$Tm2min = (Win - Tm1* \cdot Nm1)/Nm2 \quad (7)$$

$$Tm2max = (Wout - Tm1* \cdot Nm1)/Nm2 \quad (8)$$

$$Tm2* = \max(\min(Tm2tmp, Tm2max), Tm2min) \quad (9)$$

When the target rotational speed Ne* of the engine 22, the target torque Te* of the engine 22, the torque command Tm1* of the motor MG1, and the torque command Tm2* of the motor MG2 are thus set, the CPU 72 sends the target rotational speed Ne* of the engine 22 and the target torque Te* of the engine 22 to the engine ECU 24, and the torque command Tm1* of the motor MG1 and the torque command Tm2* of the motor MG2 to the motor ECU 40 (step S240), thereby terminating the present routine. The engine ECU 24, which has received the target rotational speed Ne* and the target torque Te*, performs various kinds of control such as intake air amount control, fuel injection control, ignition control, and the like such that the engine 22 is operated at the operation point indicated by the target rotational speed Ne* and the target torque Te*. Further, the motor ECU 40, which has received the torque commands Tm1* and Tm2*, performs switching control of the switching elements of the inverters 41 and 42 such that the motor MG1 is driven with the torque command Tm1* and that the motor MG2 is driven with the torque command Tm2*. Owing to this control, the hybrid automobile 20 can run with the engine 22 efficiently operated within the input/output limits Win and Wout of the battery 50 and the torque based on the required torque Tr* output to the ring gear shaft 32a as the drive shaft.

When the vehicle speed V is not equal to or higher than the intermittence prohibition vehicle speed Vstop in step S130, the CPU 72 permits the engine 22 to be operated intermittently, and determines whether or not the set required power Pe* is smaller than a threshold Pstop for stopping the engine 22 (step S140) in order to determine whether to continue the operation of the engine 22 or not. When it is determined that the set required power Pe* is not smaller than the threshold Pstop, the CPU 72 determines that the engine 22 should not be stopped, and performs the processings of the aforementioned steps S150 to S240. It should be noted herein that a value in the neighborhood of a lower limit of a power region where the engine 22 can be operated relatively efficiently can be used as the threshold Pstop.

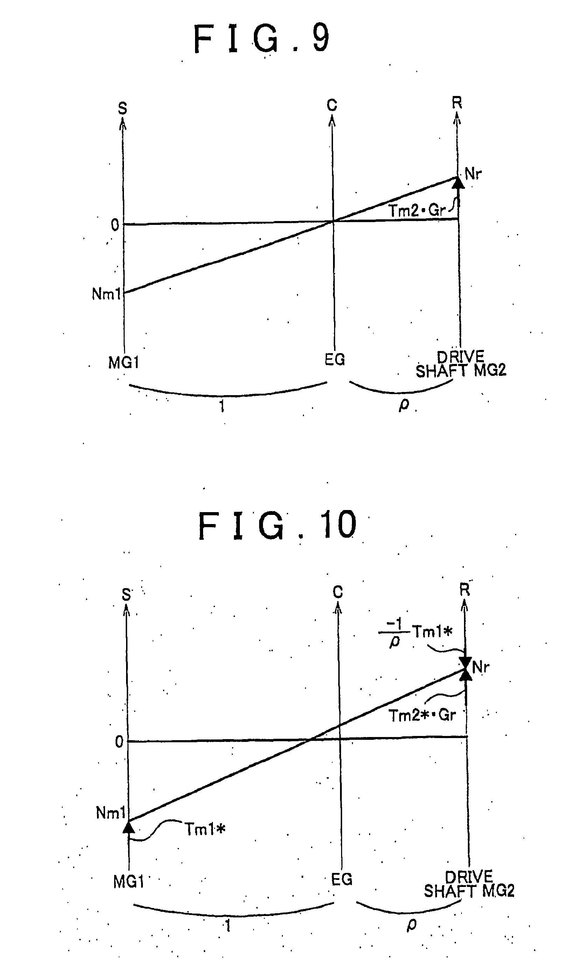

When it is determined in step S130 that the vehicle speed V is not equal to or higher than the intermittence prohibition vehicle speed Vstop and it is determined in step S140 that the required power Pe* is smaller than the threshold Pstop, the CPU 72 permits the engine 22 to be operated intermittently, determines that the engine 22 should be stopped from being operated, sends a control signal for stopping the operation of the engine 22 by stopping fuel injection control and ignition control to the engine ECU 24 to stop the engine 22 (step S250), and sets the torque command Tm1* of the motor MG1 to the value of 0 (step S260). The CPU 72 then sets the provisional torque Tm2tmp as a provisional value of the torque to be output from the motor MG2, to a value obtained by dividing the required torque Tr* by the gear ratio Gr of the reduction gear 35 (step S270), substitutes the value of 0 for the torque command Tm1* in the aforementioned expressions (7) and (8) to calculate the torque limits Tm2min and Tm2max of the motor MG2 (step S280), limits the provisional torque Tm2tmp by the torque limits Tm2min and Tm2max according to the expression (9) to set the torque command Tm2* of the motor MG2 (step S290), and sends the set torque commands Tm1* and Tm2* to the motor ECU 40 (step S300), thereby terminating the present routine. Owing to this control, the hybrid automobile 20 can run with the engine 22 stopped from being operated and with the required torque Tr* output from the motor MG2 to the ring gear shaft 32a as the drive shaft within the range between the input/output limits Win and Wout of the battery 50. FIG. 9 is an alignment chart showing a mechanical relationship between rotational speed and torque in the rotational elements of the motive power distribution/synthesis mechanism 30 at the time when the hybrid automobile 20 is running with the engine 22 stopped from being operated.

When it is determined in step S120 that the engine 22 is not in operation, the CPU 72 determines whether or not the engine 22 is being started (step S310). When the engine 22 is not being started, the CPU 72 determines whether or not the vehicle speed V is equal to or higher than the intermittence prohibition vehicle speed Vstart (step S315) in order to determine whether or not the engine should be started. When the vehicle speed V is equal to or higher than the intermittence prohibition vehicle speed Vstart, namely, when the vehicle speed V is included in the intermittence prohibition vehicle speed range as a range of high vehicle speed with the intermittence prohibition vehicle speed Vstart shown in FIGs. 4A and 4B serving as a boundary value, the CPU 72 prohibits the engine 22 from being operated intermittently, and determines that the stopped engine 22 should be started. On the other hand, when the vehicle speed V is not equal to or higher than the intermittence prohibition vehicle speed Vstart, namely, when the vehicle speed V is included in the intermittence permission vehicle speed range as a range of low vehicle speed with the intermittence prohibition vehicle speed Vstart shown in FIGs. 4A and 4B serving, as a boundary value, the CPU 72 permits the engine 22 to be operated intermittently, and determines that the engine 22 can be stopped continuously. It should be noted herein that the aforementioned intermittence prohibition vehicle speed setting routine sets the intermittence prohibition vehicle speed Vstart to the value V2 when the running mode is the normal mode, and to the value V4 when the running mode is the power mode. As shown in FIGs. 4A and 4B, the value V4 is smaller than the value V2. Therefore, the intermittence prohibition vehicle speed range is wider when the running mode is the power mode than when the running mode is the normal mode. Accordingly, the vehicle speed V is often equal to or higher than the intermittence prohibition vehicle speed Vstart even when it is low, and the CPU 72 often determines that the stopped engine 22 should be started.

When the vehicle speed V is not equal to or higher than the intermittence prohibition vehicle speed Vstart in step S315, the CPU 72' permits the engine 22 to be operated intermittently, and determines whether or not the set required power Pe* is equal to or larger than a threshold Pstart for starting the engine 22 (step S320) in order to determine whether or not the engine 22 should be stopped continuously. When the required power Pe* is not equal to or larger than the threshold Pstart, the CPU 72 determines that the engine 22 should be stopped, continuously, and performs the processings of the aforementioned steps S260 to S300. It should be rioted herein that a value in the neighborhood of a lower limit of a power range where the engine 22 can be operated relatively efficiently can be used as the threshold Pstart. However, a value larger than the aforementioned threshold Pstop for stopping the engine 22 may be used to stop the engine 22 from being stopped and started frequently.

In the case where it is determined in step S315 that the vehicle speed V is equal to or higher than the intermittence prohibition vehicle speed Vstart, or even in the case where it is determined in step S315 that the vehicle speed V is not equal to or higher than the intermittence prohibition vehicle speed Vstart, when it is determined in step S320 that the required power Pe* is equal to or larger than the threshold Pstart, the CPU 72 determines that the engine 22 should be started, and sets the torque command Tm1* of the motor MG1 on the basis of a torque map at the time of engine start and an elapsed time t from the beginning of the start of the engine 22 (step S330). The torque map of the torque command Tm1* at the time of engine start is set as a function Tstart(t) based on the elapsed time t from the time of engine start such that the rotational speed Ne of the engine 22 can be rapidly increased immediately after the issuance of a command to start the engine 22 and that the engine 22 can be stably held in a motoring state at a rotational speed equal to or higher than a rotational speed Nref until fuel injection control and ignition control are started. It should be noted herein that the rotational speed Nref is a rotational speed at which fuel injection control and ignition control of the engine 22 are started.

When the torque command Tm1* of the motor MG1 is set, the CPU 72 calculates the provisional torque Tm2tmp as a provisional value of the torque to be output from the motor MG2 according to an expression (10) shown below (step S340) by adding to the required torque Tr* a value obtained by dividing the torque command Tm1* of the motor MG1 by the gear ratio p of the motive power distribution/synthesis mechanism 30, calculates the torque limits Tm2min and Tm2max of the motor MG2 using the aforementioned expressions (7) and (8) (step S350), sets the torque command Tm2* of the motor MG2 (step 5360) by limiting the provisional torque Tm2tmp by the torque limits Tm2min and Tm2max according to the aforementioned expression (9), and sends the set torque commands Tm1* and Tm2* to the motor ECU 40 (step S370).

$$Tm2tmp = (Tr*+Tm1*/\rho)/Gr \ (10)$$

Tm2tmp = (Tr*+Tml*/p)/Gr (10)

The CPU 72 then determines whether or not the rotational speed Ne of the engine 22 has become equal to or higher than the rotational speed Nref at which fuel injection control and ignition control are started (step S380). Now the time corresponding to the beginning of the start of the engine 22 is taken into account. Therefor, the rotational speed Ne of the engine 22 is low and has not leached the rotational speed Nref. Thus, the CPU 72 makes a negative determination in this step, and terminates the present routine without starting fuel injection control or ignition control.

When the start of the engine 22 is started, the CPU 72 determines in step S310 that the engine 22 is being started, therefore performs the processings of the aforementioned steps S330 to S380, waits for the rotational speed Ne of the engine 22 to become equal to or higher than the rotational speed Nref at which fuel injection control and ignition control are started (step S380), and sends a control signal to the engine ECU 24 such that fuel injection control and ignition control are started (step S390). Owing to this control, the hybrid automobile 20 can run with the stopped engine 22 being started and with .the required torque Tr* output from the motor MG2 to the ring gear shaft 32a as the drive shaft within the range between the input/output limits Win and Wout of the battery 50. FIG. 10 shows an example of an alignment chart showing a mechanical relationship between rotational speed and torque in the rotational elements of the motive power distribution/synthesis mechanism 30 at the time when the vehicle is running with the engine 2 in a motoring state.

According to the hybrid automobile 20 according to the embodiment of the invention described above, the engine 22 is prohibited from being operated intermittently when the vehicle speed V is equal to or higher than the intermittence prohibition vehicle speed, and is permitted to be operated intermittently when the vehicle speed V is not equal to or higher than the intermittence prohibition vehicle speed. In causing the hybrid automobile 20 to run in this manner, the intermittence prohibition vehicle speed is set lower when the running mode is the power mode than when the running mode is the normal speed. Therefore, when the running mode is the power mode, the engine 22 is more often prohibited from being operated intermittently and hence is more often in operation. For this reason, the engine 22 is less often started first even when the large required torque Tr* is required, and the hybrid automobile 20 can run with the required torque Tr* output swiftly. Accordingly, "a feeling of limping along" is less often caused during acceleration, and the responsiveness of a driving force is enhanced. Further, when the running mode is the normal mode, the engine 22 is more often permitted to be operated intermittently and hence can more often be stopped. Accordingly, the engine 22 can more often be stopped when the required power Pe* is small As a result, no deterioration in fuel economy is caused. Besides, the intermittence prohibition vehicle speed is set to Vstop when the engine 22 is in operation, and to Vstart when the engine 22 is stopped, and the value Vstart is larger than the value Vstop. Therefore, the engine 22 can be prevented from being started and stopped frequently in the case where the hybrid automobile 20 is' running in the neighborhood of the intermittence prohibition vehicle speed.

The hybrid automobile 20 according to the embodiment of the invention is equipped with the running mode setting switch 89 to perform control making a changeover between the power mode and the normal mode. However, the hybrid electronic control unit 70 may perform control making a changeover between the power mode and the normal mode in accordance with the running state of the hybrid automobile 20. For example, a changeover between the modes may be made depending on whether or not each of the value of the accelerator operation amount Acc or the amount of change therein and the average of the vehicle speed V or the amount of change therein has exceeded a certain value. Further, it is also appropriate to allow the setting of modes other than the normal mode and the power mode. For example, it is also appropriate to allow the setting of an economy mode in which higher priority is given to fuel economy than in the normal mode.

In the hybrid automobile 20 according to the embodiment of the invention, the values V1 to V4 are constant. However, these values may be set on the basis of another condition. For example, these values may be set on the basis of the input/output limits Win and Wout of the battery 50.

In the hybrid automobile 20 according to the embodiment of the invention, it is determined on the basis of the value Pe* whether to stop the engine 22 or not when the vehicle speed V is not equal to or higher than the intermittence prohibition vehicle speed. However, this determination may be made on the basis of another conditions For example, the determination may be made on the basis of the input/output limits Win and Wout of the battery 50. Further, the engine 22 may always be stopped when the vehicle speed V is not equal to or higher than the intermittence prohibition vehicle speed. Further, the engine 22 may be prohibited from being operated intermittently only when the vehicle speed V is equal to or higher than the intermittence prohibition vehicle speed and another condition is fulfilled. For example, the engine 22 may be prohibited from being operated intermittently only when the vehicle speed V is equal to or higher than the intermittence prohibition vehicle speed and the value Pe* has exceeded a certain threshold.

In the hybrid automobile 20 according to the embodiment of the invention, the value V2 is larger than the value V1, and the value V4 is larger than the value V3. However, the values V2 and V1 may be equal to each other, and the values V4 and V3 may be equal to each other.

In the hybrid automobile 20 according to the embodiment of the invention, the engine 22 is permitted to be operated intermittently when the vehicle speed V is not equal to or higher than the intermittence prohibition vehicle speed Vstop. However, the engine 22 may not be permitted to be operated intermittently when the power mode is set. For example, the value V3 may be a negative value whose absolute value is sufficiently large.

In the hybrid automobile 20 according to the embodiment of the invention, the engine 22 is prohibited from being operated intermittently when the vehicle speed V is equal to or higher than the intermittence prohibition vehicle speed, and is permitted to be operated intermittently when the vehicle speed V is lower than the intermittence prohibition vehicle speed. However, the engine 22 may be prohibited from being operated intermittently when the vehicle speed V is higher than the intermittence prohibition vehicle speed, and may be permitted to be operated intermittently when the vehicle speed V is equal to or lower than the intermittence prohibition vehicle speed.

In the hybrid automobile 20 according to the embodiment of the invention, the torque limits Tm1min and Tm1max for limiting the provisional torque, Tm1tmp of the motor MG1 within the range satisfying the aforementioned expressions (3) and (4) are calculated to set the torque command Tm1M* of the motor MG1, and the torque limits Tm2min and Tm2max are calculated according to the expressions (7) and (8) to set the torque command Tm2* of the motor MG2. However, the motor torque Tm1tmp may be directly set as the torque command Tm1* of the motor MG1 without being limited by the torque limits Tm1min and Tm1max within the range satisfying the expressions (3) and (4), and the torque limits Tm2min and Tm2max may be calculated, using this torque command Tm1*, according to the expressions (7) and (8) to set the torque command Tm2* of the motor MG2. In addition, any method may be employed as long as the torque commands Tm1* and Tm2* of the motors MG1 and MG2 are set within the range between the input/output limits Win and Wout of the battery 50.

In the hybrid automobile 20 according to the embodiment of the invention, the motor MG2 is mounted on the ring gear shaft 32a as the drive shaft via the reduction gear 35. However, the motor MG2 may be directly mounted on the ring gear shaft 32a. The motor MG2 may also be mounted on the ring gear shaft 32a via a transmission with two speed stages, three speed stages, four speed stages or the like instead of being mounted thereon via the reduction gear 35.

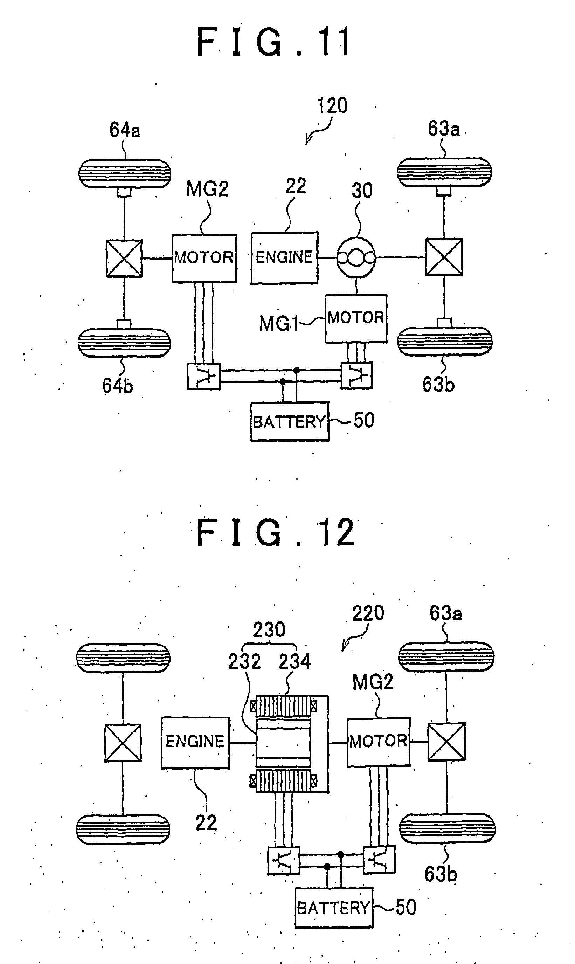

In the hybrid automobile 20 according to the embodiment of the invention, the motive power of the motor MG2 is changed in speed through the reduction gear 35 and output to the ring gear shaft 32a. However, as exemplified as a hybrid automobile 120 according to a modification example of FIG. 11, the motive power of the motor MG2 may be transmitted to an axle (an axle connected to wheels 64a and 64b in FIG. 11) that is different from an axle to which the ring gear shaft 32a is connected (an axle to which the driving wheels 63a and 63b are connected in FIG 11).

In the hybrid automobile 20 according to the embodiment of the invention, the motive power of the engine 22 is outputs to the ring gear shaft 32a as the drive shaft connected to the driving wheels 63a and 63b via the motive power distribution/synthesis mechanism 30. However, as exemplified as a hybrid automobile 220 according to another modification example of FIG. 12, the hybrid automobile 220 may be equipped with a paired rotor motor 230, which has an inner rotor 232 connected to the crankshaft .26 of the engine 22 and an outer rotor 234 connected to the drive shaft for outputting motive powers to the driving, wheels 63a and 63b, and transmits part of the motive power of the engine 22 to the drive shaft and converts the rest of the motive power into an electric power.

Further, the invention should not be exclusively applied to the hybrid automobiles as described above. The invention is also applicable to vehicles other than automobiles or methods of controlling such vehicles.

It will now be described how the main elements according to the embodiment of the invention correspond' to the main elements according to the invention described in the section of "SUMMARY OF THE INVENTION". In the embodiment of the invention, the engine 22 may be regarded as "the internal combustion engine". The motive power distribution/synthesis mechanism 30 and the motor MG1 may be regarded as "the electric power/motive power input/output means". The motor MG2 may be regarded as "the electric motor". The battery 50 may be regarded as "the storage means". The vehicle speed sensor 88 may be regarded as "the vehicle speed detection means". The hybrid electronic control unit 70, which performs the processing of step S110 in the driving control routine of FIG. 2A to set the required torque Tr* on the basis of the accelerator operation amount Acc and the vehicle speed V, may be regarded as "the required driving force setting means". The running mode setting switch 89 may be regarded as "the running mode setting means". The hybrid electronic control unit 70, which executes the intermittence prohibition vehicle speed setting routine of FIG 3 to set the intermittence prohibition vehicle speeds Vstop and Vstart on the basis of the mode setting signal MSW from the running mode setting switch 89, may be regarded as "the vehicle speed threshold setting means". The hybrid electronic control unit 70, which sets the target rotational speed Ne* of the engine 22 and the target torque Te* of the engine 22 and sets the torque commands Tm1* and Tm2* of the motors MG1 and MG2 such that the hybrid automobile 20 runs with the engine 22 operated intermittently and with the required torque Tr* output to the ring gear shaft 32a as the drive shaft within the range between the input/output limits Win and Wout of the battery 50 and transmits the set values to the engine ECU 24 and the motor ECU 40 when the vehicle speed V is not equal to or higher than the intermittence prohibition vehicle speed, and sets the target rotational speed Ne* of the engine 22 and the target torque Te* of the engine 22 and sets the torque commands Tm1* and Tm2* of the motors MG1 and MG2 such that the hybrid automobile 20 runs with the engine 22 prohibited from being operated intermittently so as to be operated continuously and with the required torque Tr* output to the ring gear shaft 32a as the drive shaft within the range between the input/output limits Win and Wout of the battery 50 and transmits the set values to the engine ECU 24 and the motor ECU 40 when the vehicle speed V is equal to or higher than the intermittence prohibition vehicle speed, the engine ECU 24 for controlling the engine 22 on the basis of the target rotational speed Ne* and the target torque Te*, and the motor ECU 40 for controlling the motors MG1 .and MG2 on the basis of the torque commands Tm1* and Tm2* may be regarded as "the control means". Further, the motor MG1 may be regarded as "the electric power generator". The motive power distribution/synthesis mechanism 30 may be regarded as "the three shaft-type motive power input/output means". Further, the paired rotor motor 230 may also be regarded as "the electric power/motive power input/output means".

It should be noted herein that "the internal combustion engine" should not be limited to an internal combustion engine that outputs a motive power using a hydrocarbon-type fuel such as gasoline, diesel oil, or the like. Any type of internal combustion engine, including a hydrogen engine, may be employed as "the internal combustion engine "The electric power/motive power input/output means" should not be limited to the combination of the motive power distribution/ synthesis mechanism 30 and the motor MG1 or the paired rotor motor 230. Any means that is connected to the drive shaft coupled to the axle and to the output shaft of the internal combustion engine rotatably independently of the drive shaft and can input/output motive powers to/from the drive shaft and the output shaft with an electric power and a motive power input/output may be employed as "the electric power/motive power input/output means". "The electric motor" should not be limited to the motor MG2 constructed as a synchronous electric power generation motor. Any type of electric motor, including an induction electric motor, may be employed as "the electric motor" as long as a motive power can be input/output to/from the drive shaft. "The storage means" should not be limited to the battery 50 as a secondary battery. Any means, including a capacitor or the like, may be employed as "the storage means" as long as electric powers can be exchanged with the electric power/motive power input/output means or the electric motor. "The vehicle speed detection means" should not be limited to the vehicle speed sensor 88. Any means; including means for calculating the vehicle speed V on the basis of the rotational speed of the ring gear shaft 32a as the drive shaft, means for calculating the vehicle speed V on the basis of signals from wheel speed sensors mounted on the driving wheels 63a and 63b and driven wheels, or the like, may be employed as "the vehicle speed detection means" as long as the vehicle speed is detected. "The required driving force setting means" should not be limited to the means for setting the required torque Tr* on'the basis of the accelerator operation amount Acc and the vehicle speed V. Any means, including means for setting the required torque on the basis of only the accelerator operation amount Acc, means for setting the required torque on the basis of a running position on a running route in the case where the running route is set in advance, or the like, may be employed as "the required driving force setting means" as long as a required driving force required for running is set. "The running mode setting means" should not be limited to the running mode setting switch 89. Any means may be employed as "the running mode setting means" as long as a changeover can be made between the normal mode and the power mode in which higher priority is given to the responsiveness of a driving force than in the normal mode. Any type of means may be employed as "the vehicle speed threshold setting means" as long as the vehicle speed threshold as the boundary value between the stop permission vehicle speed range for permitting the internal combustion engine to be stopped and the stop prohibition vehicle speed range for prohibiting the internal combustion engine from being stopped is set on the basis of the running modes. "The control means" should not be limited to the combination of the hybrid electronic control unit 70, the engine ECU 24, and the motor ECU 40. For example, "the controls means" may be configured as a single electronic control unit. Further, "the control means" should not be limited to the hybrid electronic control unit 70, which sets the target rotational speed Ne* of the engine 22 and the target torque Te* of the engine 22 and sets the torque commands Tm1* and Tm2* of the motors MG1 and MG2 such that the hybrid automobile 20 runs with the engine 22 operated intermittently and with the required torque Tr* output to the ring gear shaft 32a as the drive shaft within the range between the input/output limits Win and Wout of the battery 50 and transmits the set values to the engine ECU 24 and the motor ECU 40 when the vehicle speed V is not equal to or higher than the intermittence prohibition vehicle speed, and sets the target rotational speed Ne* of the engine 22 and the target torque Te* of the engine 22 and sets the torque commands Tm1* and Tm2* of the motors MG1 and MG2 such that the hybrid automobile 20 runs with the engine 22 prohibited from being operated intermittently so as to be operated continuously and with the required torque Tr* output to the ring gear shaft 32a as the drive shaft within the range between the input/ output limits Win and Wout of the battery 50 and transmits the set values to the engine ECU 24 and the motor ECU) 40 when the vehicle speed V is equal to or higher than the intermittence prohibition vehicle speed, the engine ECU 24 for controlling the engine 22 on the basis of the target rotational speed Ne* and the target torque Te*, and the motor ECU 40 for controlling the motors MG1 and MG2 on the basis of the torque commands. Tm1* and Tm2*. Any means may be employed as "the control means" as long as the internal combustion engine .is permitted to be stopped and the internal combustion engine, the electric power/motive power input/output means, and the electric motor are controlled such that the hybrid automobile runs by the driving force based on the set required driving force when the detected vehicle speed is included in the set stop permission vehicle speed range, and the internal combustion engine is prohibited from being stopped and the internal combustion engine, the electric power/motive power input/output means, and the electric motor are controlled such that the hybrid automobile runs by the driving force based on the set required driving force when the detected vehicle speed is included in the set stop prohibition vehicle speed range. "The electric power generator" should not be limited to the motor MG1 configured as a synchronous electric power generation motor. Any type of electric power generator, including an induction electric motor or the like, may be employed as "the electric power generator" as long as a motive power can be input/output. "The three shaft-type motive power input/output means" should not be limited to the aforementioned motive power distribution/synthesis mechanism 30. Any means, including means employing a double pinion-type planetary gear mechanism, means constructed as a combination of a plurality of planetary gear mechanisms and connected to four or more shafts, means having an operation and an effect that are different from those of a planetary gear, such as a differential gear, or the like, may be employed as "the three shaft-type motive power input/output means" as long as the means is connected to the three shafts, namely, the drive shaft, the output shaft, and the rotary shaft of the electric power generator and a motive power is input/output, on the basis of motive powers input/output to/from any two of the three shafts, to/from the other shaft.

**Claims**

1. A hybrid vehicle comprising:

   an internal combustion engine (**22**);
   electric power/motive power input/output means (**30**, **MG1**) connected to a drive shaft (**32a**) connected to wheels (**63a**, **63b**), and connected to an output shaft (**26**) of the internal combustion engine (**22**) rotatably independently of the drive shaft (**32a**), for inputting motive powers from the drive shaft (**32a**) and the output shaft (**26**) and outputting motive powers to the drive shaft (**32a**) and the output shaft (**26**) along with an electric power and a motive power input/output;
   an electric motor (**MG2**) that inputs/outputs a motive power for running;
   storage means (**50**) for exchanging electric powers with the electric power/motive power input/output means (**30**, **MG1**) and the electric motor (**MG2**);
   vehicle speed detection means (**43**, **44**) for detecting a vehicle speed; and
   required driving force setting means (**70**) for setting a required driving force required for running;
   control means (**24**, **40**, **70**) for permitting the internal combustion engine (**22**) to be stopped and controlling the internal combustion engine (**22**), the electric power/motive power input/output means (**30**, **MG1**), and the electric motor (**MG2**) such that the hybrid vehicle runs by a driving force based on the set required driving force when the detected vehicle speed is included in a set stop permission vehicle speed range, and prohibiting the internal combustion engine (**22**) from being stopped and controlling the internal combustion engine (**22**), the electric power/motive power input/output means (**30**, **MG1**), and the electric motor (**MG2**) such that the hybrid vehicle runs by a driving force based on the set required driving force when the detected vehicle speed is included in a set stop prohibition vehicle speed range,
   **characterized by**
   running mode setting means (**70**) for setting a running mode from among a plurality of running modes including a normal mode and a power mode in which higher priority is given to responsiveness of a driving force than in the normal mode;
   vehicle speed threshold setting means (**70**) for setting a vehicle speed threshold, which is a boundary value between the stop permission vehicle speed range for permitting the internal combustion engine (**22**) to be stopped and the stop prohibition vehicle speed range for prohibiting the internal combustion engine (**22**) from being stopped, smaller when the power mode is set than when the normal mode is set in setting the vehicle speed threshold on a basis of the running modes.

2. The hybrid vehicle according to claim 1, wherein the vehicle speed threshold setting means (**70**) sets the vehicle speed threshold smaller when the internal combustion engine (**22**) is in operation than when the internal combustion engine (**22**) is stopped.

3. The hybrid vehicle according to claim 1 or 2, wherein the electric power/motive power input/output means (**30**, **MG1**) is equipped with an electric power generator (**MG1**) capable of inputting/outputting a motive power, and three shaft-type motive power input/output means (**30**) connected to the output shaft (**26**) of the internal combustion engine (**22**), the drive shaft (**32a**), and a rotary shaft of the electric power generator (**MG1**) to input a motive power from one shaft or output a motive power to the one shaft, on a basis of motive powers output to or input from other two shafts among the three shafts.

4. The hybrid vehicle according to any one of claims 1 to 3, further comprising a running mode setting switch (**89**), wherein the running mode setting means (**70**) sets a running mode in accordance with an operation of the running mode setting switch (**89**).

5. The hybrid vehicle according to any one of claims 1 to 3, wherein the running mode setting means (**70**) makes a changeover in the running mode depending on whether or not at least one of a value of an accelerator operation amount, an amount of change in the accelerator operation amount, an average of a vehicle speed V, and an amount of change in the average of the vehicle speed V has exceeded a certain value.

6. The hybrid vehicle according to any one of claims 1 to 5, wherein the vehicle speed threshold setting means (**70**) sets a predetermined vehicle speed threshold for each of the running modes.

7. The hybrid vehicle according to any one of claims 1 to 5, wherein the vehicle speed threshold setting means (**70**) sets the vehicle speed threshold on a basis of input/output limits of a battery (**50**).

8. A control method for a hybrid vehicle that includes:

an internal combustion engine (**22**);
electric power/motive power input/output means (**30**, **MG1**) connected to a drive shaft (**32a**) connected to wheels (**63a**, **63b**), and connected to an output shaft (**26**) of the internal combustion engine (**22**) rotatably independently of the drive shaft (**32a**), for inputting motive powers from the drive shaft (**32a**) and the output shaft (**26**) and outputting motive powers to the drive shaft (**32a**) and the output shaft (**26**) with an electric power and a motive power input/output;
an electric motor (**MG2**) that inputs/outputs a motive power for running;
storage means (**50**) for exchanging electric powers with the electric power/motive power input/output means (**30**, **MG1**) and the electric motor (**MG2**); and
vehicle speed detection means (**43**, **44**) for detecting a vehicle speed; the control method comprising:

permitting the internal combustion engine (**22**) to be stopped and controlling the internal combustion engine (**22**), the electric power/motive power input/output means (**30**, **MG1**), and the electric motor (**MG2**) such that the hybrid vehicle runs by a driving force based on a required driving force required for running when the detected vehicle speed is included in a set stop permission vehicle speed range, and prohibiting the internal combustion engine from being stopped and controlling the internal combustion engine (**22**), the electric power/motive power input/output means (**30**, **MG1**) and the electric motor (**MG2**) such that the hybrid vehicle runs by a driving force based on the required driving force when the detected vehicle speed is included in a set stop prohibition vehicle speed range,
**characterized in that**
the hybrid vehicle further comprises running mode setting means (**70**) for setting a running mode from among a plurality of running modes including a normal mode and a power mode in which higher priority is given to responsiveness of a driving force than in the normal mode, the control method further comprising:

setting a vehicle speed threshold, which is a boundary value between the stop permission vehicle speed range for permitting the internal combustion engine (**22**) to be stopped and the stop prohibition vehicle speed range for prohibiting the internal combustion engine (**22**) from being stopped, smaller when the power mode is set than when the normal mode is set in setting the vehicle speed threshold on a basis of the running modes.

**Patentansprüche**

1. Hybridfahrzeug mit
einer Brennkraftmaschine (**22**);
einer Einrichtung zur Aufnahme/Abgabe von elektrischer Leistung/Bewegungsleistung (**30**, **MG1**), die mit einer mit Rädern (**63a**, **63b**) verbundenen Antriebswelle (**32a**) verbunden ist und die mit einer Ausgangswelle (**26**) der Brennkraftmaschine (**22**) drehbar unabhängig von der Antriebswelle (**32a**) verbunden ist, zur Aufnahme von Bewegungsleistungen aus der Antriebswelle (**32a**) und der Ausgangswelle (**26**) sowie zur Abgabe von Bewegungsleistungen an die Antriebswelle (**32a**) und die Ausgangswelle (**26**) zusammen mit einer Aufnahme/Abgabe von elektrischer Leistung und Bewegungsleistung;
einem Elektromotor (**50**), der eine Bewegungsleistung zum Fahren aufnimmt/abgibt;
einer Speichereinrichtung (**50**) zum Austauschen elektrischer Leistungen mit der Einrichtung zur Aufnahme/Abgabe von elektrischer Leistung/Bewegungsleistung (**30**, **MG1**) und dem Elektromotor (**MG2**);
einer Fahrzeuggeschwindigkeitserfassungseinrichtung (**43** ,**44**) zur Erfassung einer Fahrzeuggeschwindigkeit; und
einer Sollantriebskrafteinstellungseinrichtung (**70**) zur Einstellung einer zum Fahren erforderlichen Sollantriebskraft;
einer Steuerungseinrichtung (**24**, **40**, **70**) zum Zulassen eines Stoppens der Brennkraftmaschine (**22**) und zur Steuerung der Brennkraftmaschine, der Einrichtung zur Aufnahme/Abgabe von elektrischer Leistung/Bewegungsleistung (**30**, **MG1**) und des Elektromotors (**MG2**) derart, dass das Hybridfahrzeug durch eine auf der eingestellten Sollantriebskraft beruhenden Antriebskraft fährt, wenn die erfasste Fahrzeuggeschwindigkeit in einem eingestellten Stoppzulassungs-Fahrzeuggeschwindigkeitsbereich enthalten ist, sowie zum Unterbinden eines Stoppens der Brennkraftmaschine und zur Steuerung der Brennkraftmaschine, der Einrichtung zur Aufnahme/Abgabe von elektrischer Leistung/Bewegungsleistung (**30**, **MG1**) und des Elektromotors (**MG2**) derart, dass das Hybridfahrzeug durch eine auf die eingestellte Sollantriebskraft beruhende Antriebskraft fährt, wenn die erfasste Fahrzeuggeschwindigkeit in einem eingestellten Stoppunterbindungs-Fahrzeuggeschwindigkeitsbereich enthalten ist,
**gekennzeichnet durch**
eine Fahrbetriebsarteinstellungseinrichtung (**70**) zur Einstellung einer Fahrbetriebsart aus einer Vielzahl von Fahrbetriebsarten einschließlich einer normale Betriebsart und einer Leistungsbetriebsart, in der Reaktionsfreudigkeit höhere Priorität als in der normalen Betriebsart eingeräumt wird;
einer Fahrzeuggeschwindigkeits-Schwellwerteinstellungseinrichtung (**70**) zum Einstellen eines Fahrzeuggeschwindigkeitsschwellwerts, der ein Grenzwert zwischen dem Stoppzulassungs-Fahrzeuggeschwindigkeitsbereich zum Zulassen des Stoppens der Brennkraftmaschine (**22**) und dem Stoppunterbindungs-Fahrzeuggeschwindigkeitsbereich zum Unterbinden des Stoppens der Brennkraftmaschine (**22**) ist, bei der Einstellung des Fahrzeuggeschwindigkeitsschwellwerts auf der Grundlage der Fahrbetriebsarten auf einen kleineren Wert, wenn die Leistungsbetriebsart eingestellt ist als wenn die normale Betriebsart eingestellt ist.

2. Hybridfahrzeug nach Anspruch 1, wobei die Fahrzeuggeschwindigkeits-Schwellwerteinstellungseinrichtung (**70**) den Fahrzeuggeschwindigkeitsschwellwert auf einen kleineren Wert einstellt, wenn die Brennkraftmaschine (**22**) in Betrieb ist als wenn die Brennkraftmaschine (**22**) gestoppt ist.

3. Hybridfahrzeug nach Anspruch 1 oder 2, wobei die Einrichtung zur Aufnahme/Abgabe von elektrischer Leistung/ Bewegungsleistung (**30**, **MG1**) mit einem elektrischen Leistungsgenerator (**MG1**), der in der Lage ist, eine Bewegungsleistung aufzunehmen/abzugeben, und einer Bewegungsleistungskraft-Aufnahme/Abgabe-Einrichtung (**30**) der Drei-Wellen-Bauart ausgerüstet ist, die mit der Ausgangswelle (**26**) der Brennkraftmaschine (**22**), der Antriebswelle (**32a**) und einer Drehwelle des elektrischen Leistungsgenerators (**MG1**) verbunden ist, um auf der Grundlage von Bewegungsleistungen, die an oder von den anderen zwei Wellen der drei Wellen abgegeben oder aufgenommen werden, eine Bewegungsleistung aus einer Welle aufzunehmen oder eine Bewegungsleistung an eine Welle abzugeben.

4. Hybridfahrzeug nach einem der Ansprüche 1 bis 3, weiterhin mit einem Fahrbetriebsart-Einstellungsschalter (**89**), wobei die Fahrbetriebsarteinstellungseinrichtung (**70**) eine Fahrbetriebsart entsprechend einer Bedienung des Fahrbetriebsart-Einstellungsschalters (**89**) einstellt.

5. Hybridfahrzeug nach einem der Ansprüche 1 bis 3, wobei die Fahrbetriebsarteinstellungseinrichtung (**70**) einen Wechsel in der Fahrbetriebsart in Abhängigkeit davon vornimmt, ob ein Fahrpedalbetätigungsausmaß, eine Änderungsgröße des Fahrpedalbetätigungsausmaßes, ein Durchschnitt einer Fahrzeuggeschwindigkeit V und/oder eine Änderungsgröße des Durchschnitts der Fahrzeuggeschwindigkeit V einen gewissen Wert überschritten hat oder nicht.

6. Hybridfahrzeug nach einem der Ansprüche 1 bis 5, wobei die Fahrzeuggeschwindigkeits-Schwellwerteinstellungseinrichtung (**70**) einen vorbestimmten Fahrzeuggeschwindigkeitsschwellwert für jeden der Fahrbetriebsarten einstellt.

7. Hybridfahrzeug nach einem der Ansprüche 1 bis 5, wobei die Fahrzeuggeschwindigkeits-Schwellwerteinstellungseinrichtung (**70**) den Fahrzeuggeschwindigkeitsschwellwert auf der Grundlage von Eingangs- /Ausgangsgrenzen einer Batterie (**50**) einstellt.

8. Steuerungsverfahren für ein Hybridfahrzeug, das aufweist:

eine Brennkraftmaschine (**22**);
eine Einrichtung zur Aufnahme/Abgabe von elektrischer Leistung/Bewegungsleistung (**30**, **MG1**), die mit einer mit Rädern (**63a**, **63b**) verbundenen Antriebswelle (**32a**) verbunden ist und die mit einer Ausgangswelle (**26**) der Brennkraftmaschine (**22**) drehbar unabhängig von der Antriebswelle (**32a**) verbunden ist, zur Aufnahme von Bewegungsleistungen aus der Antriebswelle (**32a**) und der Ausgangswelle (**26**) sowie zur Abgabe von Bewegungsleistungen an die Antriebswelle (**32a**) und die Ausgangswelle (**26**) zusammen mit einer Aufnahme/ Abgabe von elektrischer Leistung und Bewegungsleistung;

einen Elektromotor (**50**), der eine Bewegungsleistung zum Fahren aufnimmt/abgibt;

eine Speichereinrichtung (**50**) zum Austauschen elektrischer Leistungen mit der Einrichtung zur Aufnahme/ Abgabe von elektrischer Leistung/Bewegungsleistung (**30**, **MG1**) und dem Elektromotor (**MG2**); und

eine Fahrzeuggeschwindigkeitserfassungseinrichtung (**43** ,**44**) zur Erfassung einer Fahrzeuggeschwindigkeit;

Zulassen eines Stoppens der Brennkraftmaschine (**22**) und Steuern der Brennkraftmaschine, der Einrichtung zur Aufnahme/Abgabe von elektrischer Leistung/Bewegungsleistung (**30**, **MG1**) und des Elektromotors (**MG2**) derart, dass das Hybridfahrzeug durch eine auf einer zum Fahren erforderlichen Sollantriebskraft beruhenden Antriebskraft fährt, wenn die erfasste Fahrzeuggeschwindigkeit in einem eingestellten Stoppzulassungs-Fahrzeuggeschwindigkeitsbereich enthalten ist, sowie Unterbinden eines Stoppens der Brennkraftmaschine und Steuern der Brennkraftmaschine, der Einrichtung zur Aufnahme/Abgabe von elektrischer Leistung/Bewegungsleistung (**30**, **MG1**) und des Elektromotors (**MG2**) derart, dass das Hybridfahrzeug durch eine auf die eingestellte Sollantriebskraft beruhende Antriebskraft fährt, wenn die erfasste Fahrzeuggeschwindigkeit in einem eingestellten Stoppunterbindungs-Fahrzeuggeschwindigkeitsbereich enthalten ist,

**dadurch gekennzeichnet, dass**

das Hybridfahrzeug weiterhin eine Fahrbetriebsarteinstellungseinrichtung (**70**) zur Einstellung einer Fahrbetriebsart aus einer Vielzahl von Fahrbetriebsarten einschließlich einer normale Betriebsart und einer Leistungsbetriebsart, in der Reaktionsfreudigkeit höhere Priorität als in der normalen Betriebsart eingeräumt wird, wobei das Steuerungsverfahren weiterhin aufweist:

Einstellen eines Fahrzeuggeschwindigkeitsschwellwerts, der ein Grenzwert zwischen dem Stoppzulassungs-Fahrzeuggeschwindigkeitsbereich zum Zulassen des Stoppens der Brennkraftmaschine (**22**) und dem Stoppunterbindungs-Fahrzeuggeschwindigkeitsbereich zum Unterbinden des Stoppens der Brennkraftmaschine (**22**) ist, bei der Einstellung des Fahrzeuggeschwindigkeitsschwellwerts auf der Grundlage der Fahrbetriebsarten auf einen kleineren Wert, wenn die Leistungsbetriebsart eingestellt ist als wenn die normale Betriebsart eingestellt ist.

## Revendications

**1.** Véhicule hybride comprenant :

un moteur à combustion interne (22);

un moyen (30, MG1) d'entrée/sortie de puissance électrique/puissance motrice relié à un arbre d'entraînement (32a) reliés à des roues (63a, 63b), et relié à un arbre de sortie (26) du moteur à combustion interne (22) en rotation indépendante de l'arbre d'entraînement (32a), pour introduire des puissances motrices de l'arbre d'entraînement (32a) et de l'arbre de sortie (26) et délivrer en sortie des puissances motrices à l'arbre d'entraînement (32a) et à l'arbre de sortie (26) conjointement avec une puissance électrique et une entrée/sortie de puissance motrice ;

un moteur électrique (MG2) qui introduit/délivre en sortie une puissance motrice pour la marche du véhicule ;

un moyen de stockage (50) pour échanger des puissances électriques avec le moyen (30, MG1) d'entrée/sortie de puissance électrique/puissance motrice et le moteur électrique (MG2) ;

un moyen (43, 44) de détection de vitesse de véhicule pour détecter une vitesse de véhicule ; et

un moyen (70) d'établissement de force motrice requise pour établir une force motrice requise pour la marche du véhicule ;

un moyen de commande (24, 40, 70) pour permettre au moteur à combustion interne (22) d'être arrêté et commander le moteur à combustion interne (22), le moyen (30, MG1) d'entrée/sortie de puissance électrique/ puissance motrice, et le moteur électrique (MG2) de telle sorte que le véhicule hybride roule par une force motrice sur la base de la force motrice requise établie lorsque la vitesse de véhicule détectée est comprise dans une plage de vitesses de véhicule d'autorisation d'arrêt établie, et pour empêcher le moteur à combustion interne (22) d'être arrêté et commander le moteur à combustion interne (22), le moyen (30, MG1) d'entrée/ sortie de puissance électrique/puissance motrice, et le moteur électrique (MG2) de telle sorte que le véhicule hybride roule par une force motrice sur la base de la force motrice requise établie lorsque la vitesse de véhicule détectée est comprise dans une plage de vitesses de véhicule d'interdiction d'arrêt,

**caractérisé par**

un moyen (70) d'établissement de mode de marche pour établir un mode de marche parmi une pluralité de modes de marche comportant un mode normal et un mode de puissance où une plus grande priorité est donnée à la réactivité d'une force motrice que dans le mode normal ;

un moyen (70) de réglage de seuil de vitesse de véhicule pour régler un seuil de vitesse de véhicule, qui est une valeur limite entre la plage de vitesse de véhicule d'autorisation d'arrêt pour permettre au moteur à combustion interne (22) d'être arrêté et la plage de vitesse de véhicule d'interdiction d'arrêt pour empêcher le moteur à combustion interne (22) d'être arrêté, de sorte à être plus petit lorsque le mode de puissance est établi que lorsque le mode normal est établi lors du réglage du seuil de vitesse de véhicule sur la base des modes de marche.

2. Véhicule hybride selon la revendication 1, dans lequel le moyen (70) de réglage de seuil de vitesse de véhicule règle le seuil de vitesse de véhicule de sorte à être plus petit lorsque le moteur à combustion interne (22) fonctionne que lorsque le moteur à combustion interne (22) est arrêté.

3. Véhicule hybride selon la revendication 1 ou 2, dans lequel le moyen (30, MG1) d'entrée/sortie de puissance électrique/puissance motrice est équipé d'un générateur d'énergie électrique (MG1) capable d'introduire/délivrer en sortie une puissance motrice, et un moyen (30) d'entrée/sortie de puissance motrice du type à trois arbres relié à l'arbre de sortie (26) du moteur à combustion interne (22), l'arbre d'entraînement (32a), et un arbre rotatif du générateur d'énergie électrique (MG1) pour introduire une puissance motrice d'un arbre ou délivrer en sortie une puissance motrice à l'un arbre, sur la base de puissances motrices délivrées en sortie à deux autres arbres ou introduites de deux autres arbres parmi les trois arbres.

4. Véhicule hybride selon l'une quelconque des revendications 1 à 3, comprenant en outre un commutateur (89) d'établissement de mode de marche, dans lequel le moyen (70) d'établissement de mode de marche établit un mode de marche conformément à une opération du commutateur (89) d'établissement de mode de marche.

5. Véhicule hybride selon l'une quelconque des revendications 1 à 3, dans lequel le moyen (70) d'établissement de mode de marche effectue un passage dans le mode de marche selon qu'au moins l'une valeur d'une quantité d'actionnement d'accélérateur, d'une quantité de changement de la quantité d'actionnement d'accélérateur, d'une moyenne d'une vitesse de véhicule V, et d'une quantité de changement de la moyenne de la vitesse de véhicule V a dépassé une certaine valeur ou non.

6. Véhicule hybride selon l'une quelconque des revendications 1 à 5, dans lequel le moyen (70) de réglage de seuil de vitesse de véhicule règle un seuil de vitesse de véhicule prédéterminé pour chacun des modes de marche.

7. Véhicule hybride selon l'une quelconque des revendications 1 à 5, dans lequel le moyen (70) de réglage de seuil de vitesse de véhicule règle le seuil de vitesse de véhicule sur la base de limites d'entrée/sortie d'une batterie (50).

8. Procédé de commande pour un véhicule hybride qui comporte :

un moteur à combustion interne (22) ;

un moyen (30, MG1) d'entrée/sortie de puissance électrique/puissance motrice relié à un arbre d'entraînement (32a) relié à des roues (63a, 63b), et relié à un arbre de sortie (26) du moteur à combustion interne (22) en rotation indépendante de l'arbre d'entraînement (32a), pour introduire des puissances motrices de l'arbre d'entraînement (32a) et de l'arbre de sortie (26) et délivrer en sortie des puissances motrices à l'arbre d'entraînement (32a) et à l'arbre de sortie (26) conjointement avec une puissance électrique et une entrée/sortie de puissance motrice ;

un moteur électrique (MG2) qui introduit/délivre en sortie une puissance motrice pour la marche du véhicule ;

un moyen de stockage (50) pour échanger des puissances électriques avec le moyen (30, MG1) d'entrée/sortie de puissance électrique/puissance motrice et le moteur électrique (MG2) ; et

un moyen (43, 44) de détection de vitesse de véhicule pour détecter une vitesse de véhicule ; le procédé de commande comprenant le fait :

de permettre au moteur à combustion interne (22) d'être arrêté et commander le moteur à combustion interne (22), le moyen (30, MG1) d'entrée/sortie de puissance électrique/puissance motrice, et le moteur électrique (MG2) de telle sorte que le véhicule hybride roule par une force motrice sur la base d'une force motrice requise pour la marche du véhicule lorsque la vitesse de véhicule détectée est comprise dans une plage de vitesses de véhicule d'autorisation d'arrêt établie, et pour empêcher le moteur à combustion interne (22) d'être arrêté et commander le moteur à combustion interne (22), le moyen (30, MG1) d'entrée/sortie de puissance électrique/puissance motrice, et le moteur électrique (MG2) de telle sorte que le véhicule hybride roule par une force motrice sur la base de la force motrice requise lorsque la vitesse de véhicule détectée est comprise dans une plage de vitesses de véhicule d'interdiction d'arrêt établie,
**caractérisé en ce que**
le véhicule hybride comprend en outre un moyen (70) d'établissement de mode de marche pour établir un mode de marche parmi une pluralité de modes de marche comportant un mode normal et un mode de puissance où une plus grande priorité est donnée à la réactivité d'une force motrice que dans le mode normal, le procédé de commande comprenant en outre le fait :

de régler un seuil de vitesse de véhicule, qui est une valeur limite entre la plage de vitesses de véhicule d'autorisation d'arrêt pour permettre au moteur à combustion interne (22) d'être arrêté et la plage de vitesses de véhicule d'interdiction d'arrêt pour empêcher le moteur à combustion interne (22) d'être arrêté, de sorte à être plus petit lorsque le mode de puissance est établi que lorsque le mode normal est établi lors du réglage du seuil de vitesse de véhicule sur la base des modes de marche.

# F I G . 1

# FIG.2A

(DRIVING CONTROL ROUTINE)

INPUT ACCELERATION OPERATION AMOUNT
Acc, MOTOR ROTATIONAL
SPEEDS Nm1 AND Nm2, VEHICLE SPEED V,
ENGINE ROTATIONAL SPEED Ne,
INTERMITTENCE PROHIBITION VEHICLE SPEEDS
Vstop AND Vstart, AND
INPUT/OUTPUT LIMITS Win AND Wout — S100

SET REQUIRED TORQUE Tr* AND
REQUIRED POWER Pe*
Tr*=f(Acc, V), Pe*=Tr*×Nm2/Gr+Pb*+Loss — S110

S120
IS ENGINE IN OPERATION? — NO

S130 YES
V≥Vstop? — YES

S140 NO
Pe*<Pstop? — YES

S310
IS ENGINE BEING STARTED? — YES

S315 NO
V≥Vstart? — YES

S320 NO
Pe*≥Pstart? — NO → (1)

S250
STOP ENGINE

(1)

S150
SET TARGET ROTATIONAL SPEED Ne* AND TARGET TORQUE Te* OF ENGINE
Pe*=Ne*・Te*

S260
S180
SET MOTOR TORQUE COMMAND Tm1*
Tm1*=0

SET MOTOR TARGET ROTATIONAL SPEED Nm1* AND MOTOR PROVISIONAL TORQUE Tm1tmp
Nm1*=f(Ne*, Nm2)
Tm1tmp=f(Te*)+
PID(Nm1, Nm1*)

S330
SET MOTOR TORQUE COMMAND Tm1*
Tm1*=Tstart(t)

(2)          (3)          (4)

# F I G . 2B

②　　　S190　③　　　　　　　　④

S270

CALCULATE
MOTOR
PROVISIONAL
TORQUE Tm2tmp
Tm2tmp=Tr*/Gr

SET TORQUE LIMITS
Tm1min AND Tm1max
$0 \leq -Tm1/\rho + Tm2 \cdot Gr \leq Tr*$
$Win \leq Tm1 \cdot Nm1 + Tm2 \cdot Nm2 \leq Wout$

S340

CALCULATE MOTOR
PROVISIONAL
TORQUE Tm2tmp
Tm2tmp=
$(Tr*+Tm1*/\rho)/Gr$

S200

SET MOTOR TOROUE
COMMAND Tm1*
Tm1*=max(min(Tm1tmp,
Tm1max), Tm1min)

S350

CALCULATE TORQUE
LIMITS Tm2min AND
Tm2max
Tm2min=(Win−Tm1*·
Nm1)/Nm2
Tm2max=(Wout−Tm1*·
Nm1)/Nm2

S280

CALCULATE
TORQUE LIMITS
Tm2min AND
Tm2max
Tm2min=Win/Nm2
Tm2max=Wout/Nm2

S210

CALCULATE MOTOR
TORQUE Tm2tmp
Tm2tmp=
$(Tr*+Tm1*/\rho)/Gr$

S220

CALCULATE TORQUE
LIMITS Tm2min
AND Tm2max
Tm2min=(Win−Tm1*·
Nm1)/Nm2
Tm2max=(Wout−Tm1*·
Nm1)/Nm2

S360

SET MOTOR
TORQUE Tm2*
Tm2*=
max(min(Tm2tmp,
Tm2max), Tm2min)

S290

SET MOTOR
TORQUE Tm2*
Tm2*=
max(min(Tm2tmp,
Tm2max), Tm2min)

S230

SET MOTOR
TORQUE Tm2*
Tm2*=max(min(Tm2tmp,
Tm2max), Tm2min)

S370

SEND TORQUE
COMMANDS Tm1*
AND Tm2*

S380

Ne≧Nref? ──NO──►

YES

S240

SEND TARGET
ROTATIONAL SPEED
Ne*, TARGET
TORQUE Te*, AND
TORQUE COMMANDS
Tm1* AND Tm2*

S390

START FUEL
INJECTION AND
IGNITION CONTROL

S300

SEND TORQUE
COMMANDS Tm1*
AND Tm2*

RETURN

# FIG.3

```
        ┌─────────────────────────┐
        │     INTERMITTENCE       │
        │ PROHIBITION VEHICLE     │
        │ SPEED SETTING ROUTINE   │
        └─────────────────────────┘
                    │
   S400             │
        ┌─────────────────────────┐
        │    INPUT MODE SETTING    │
        │      SIGNAL MSW          │
        └─────────────────────────┘
                    │
   S410             │
              ╱───────────╲        YES
        ─────<   MSW=1?    >──────────────────┐
              ╲───────────╱                   │
                    │ NO                       │
   S420             │              S430        │
  ┌──────────────────────────┐  ┌──────────────────────────┐
  │   SET INTERMITTENCE      │  │   SET INTERMITTENCE      │
  │ PROHIBITION VEHICLE SPEEDS│  │ PROHIBITION VEHICLE SPEEDS│
  │   Vstop AND vstart       │  │   Vstop AND vstart       │
  │     Vstop=V1             │  │    Vstop=V3(<V1)         │
  │     Vstart=V2            │  │    Vstart=V4(<V2)        │
  └──────────────────────────┘  └──────────────────────────┘
                    │◄───────────────────────────┘
                    │
              ┌───────────┐
              │  RETURN   │
              └───────────┘
```

FIG. 4A

NORMAL MODE

INTERMITTENCE PROHIBITION VEHICLE SPEED RANGE

INTERMITTENCE PERMISSION VEHICLE SPEED RANGE

Vstop (=V1)    Vstart (=V2)    VEHICLE SPEED V

FIG. 4B

POWER MODE

INTERMITTENCE PROHIBITION VEHICLE SPEED RANGE

INTERMITTENCE PERMISSION VEHICLE SPEED RANGE

Vstop (=V3)    Vstart (=V4)    VEHICLE SPEED V

EP 2 227 409 B1

# FIG.5

# FIG.6

# F I G . 7

# F I G . 8

# FIG. 9

# FIG. 10

# FIG.11

# FIG.12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007091073 A
- US 6116363 A

- JP 2007131103 A